# EUROPÄISCHE PATENTSCHRIFT

(11) **EP 3 416 337 B1**
(45) Veröffentlichungstag und Bekanntmachung des Hinweises auf die Patenterteilung: **25.09.2019**
(21) Anmeldenummer: 17175460.9
(22) Anmeldetag: 12.06.2017
(51) Int. Cl.: H04L 12/28

(54) **VORRICHTUNG ZUR AUTOMATION EINES HAUSES ODER GEBÄUDES**
DEVICE FOR AUTOMATION OF A HOUSE OR BUILDING
DISPOSITIF D'AUTOMATISATION D'UNE MAISON OU D'UN BÂTIMENT

(43) Veröffentlichungstag der Anmeldung: 19.12.2018
(73) Patentinhaber: Smart PLACE AG, 8134 Adliswil (CH)
(72) Erfinder: BLEIKER, David, 8134 Adliswil (CH); BLEIKER, Marco, 8134 Adliswil (CH)
(74) Vertreter: EGLI-EUROPEAN PATENT ATTORNEYS

(56) Entgegenhaltungen:
- DE-A1- 19 927 635
- Anonymous: "Archivierte Webseite Bihl+Wiedemann - Gebäudeautomation", , 25. Oktober 2016 (2016-10-25), XP055401518, Gefunden im Internet: URL:https://web.archive.org/web/2016102510 5123/http://www.bihl-wiedemann.de/de/appli kationen/gebaeudeautomation.html [gefunden am 2017-08-28]
- Anonymous: "Webserver zur Temperaturmessung - Mikrocontroller.net", , 17. Oktober 2005 (2005-10-17), XP055400910, Gefunden im Internet: URL:https://www.mikrocontroller.net/topic/ 31408 [gefunden am 2017-08-24]
- Anonymous: "Speicherprogrammierbare Steuerung - Wikipedia", , 31. Mai 2017 (2017-05-31), XP055401504, Gefunden im Internet: URL:https://de.wikipedia.org/w/index.php?t itle=Speicherprogrammierbare_Steuerung&old id=165967031#SPS-Zust.C3.A4nde [gefunden am 2017-08-28]
- BS1 Kempten: "AS-i Datenaustausch", YouTube, 17. September 2013 (2013-09-17), Seiten 1-4, XP054977669, Gefunden im Internet: URL:https://www.youtube.com/watch?v=Ns8UA3 dzgLs [gefunden am 2017-08-25]
- ke NEXT: "Gebäudeautomatisierung mit AS-Interface: ke NEXT TV besuchte Bihl+Wiedemann", YouTube, 8. Mai 2015 (2015-05-08), Seiten 1-1, XP054977664, Gefunden im Internet: URL:https://www.youtube.com/watch?v=O5ul48 NG12A [gefunden am 2017-08-24]
- Anonymous: "AS-i Modul für Gebäudetechnik", , 28. Januar 2016 (2016-01-28), XP055401277, Gefunden im Internet: URL:https://www.bihl-wiedemann.de/de/produ kte/as-interface-moduleslaves/gebaeudeauto mation/produktselektor-gebaeudeautomation/ downloadResource-s/bw2537/dl1_datasheet.ht ml [gefunden am 2017-08-25]
- Bihl+wiedemann Gmbh: "Digitale und analoge Ein-/Ausgangsmodule - Bihl+Wiedemann GmbH", , 25. Oktober 2016 (2016-10-25), XP055401329, Gefunden im Internet: URL:https://web.archive.org/web/2016102510 4411/http://www.bihl-wiedemann.de/de/appli kationen/gebaeudeautomation/digitale-und-a naloge-ein-ausgangsmodule.html [gefunden am 2017-08-25]
- Anonymous: "AS-Interface - Wikipedia, the free encyclopedia", , 31. Mai 2016 (2016-05-31), Seiten 1-8, XP055276738, Gefunden im Internet: URL:https://en.wikipedia.org/wiki/AS-Inter face [gefunden am 2016-05-31]
- Anonymous: "Hausbus - Mikrocontroller.net", , 9. Mai 2017 (2017-05-09), XP055400912, Gefunden im Internet: URL:https://www.mikrocontroller.net/wikiso ftware/index.php?title=Hausbus&oldid=96240 [gefunden am 2017-08-24]
- KRIESEL W ET AL: "AS-Interface Das Aktuator-Sensor-Interface für die Automation", AKTUATOR SENSOR INTERFACE FUER DIE AUTOMATION, XX, XX, 1 January 1994 (1994-01-01), pages 55-67, XP002273144,
- Anonymous: "AS-Interface Spec. V3.0 Compliant Universal AS-i IC", Integrated Device Technology, Inc., 26 January 2016 (2016-01-26), XP055503353, 6024 Silver Creek Valley Road, San Jose, CA 95138 Retrieved from the Internet: URL:https://ja.idt.com/document/dst/asi4u- datasheet [retrieved on 2018-08-30]

## Beschreibung

### Technisches Gebiet

Die Erfindung bezieht sich auf eine Vorrichtung zur Automation eines Hauses.

### Stand der Technik

Auf dem Gebiet der Haustechnik sind Vorrichtungen zur Automation eines Hauses bekannt, welche dazu ausgebildet sind, eine selbsttätige Steuerung, Regelung und/oder Überwachung von haustechnischen Einrichtungen bzw. eine selbsttätige Steuerung, Regelung und/oder Überwachung von haustechnischen Funktionen zu ermöglichen. Diese Automation bietet den Benutzern eines Hauses ein hohes Mass an Komfort. Typische Beispiele für Verwendungen von bekannten Vorrichtungen zur Automation eines Hauses sind beispielsweise:
- automatisches Betreiben (Schalten, Steuern, Regeln) von lichttechnischen Einrichtungen, beispielsweise zur Beleuchtung von Räumen oder einer Umgebung eines Hauses;
- automatisches Betreiben (Schalten, Steuern, Regeln) aller Arten von Markisen, Sonnendächern, Jalousien, Rollläden oder Verdunkelungssystemen zum Schutz vor Licht;
- automatisches Betreiben (Schalten, Steuern, Regeln) von Einrichtungen zur Beeinflussung einer Raumtemperatur und/oder eines Raumklimas (Heizen, Kühlen, Lüften, Beeinflussung der Luftfeuchtigkeit);
- Steuerung einer Sprechanlage bzw. Videosprechanlage;
- automatisches Betreiben (Schalten, Steuern, Regeln) sicherheitstechnischer Einrichtungen, beispielsweise einer Alarmanlage, einer Einrichtung zur Überwachung eines Hauses (z.B. Videoüberwachung) und/oder einer Einrichtung zur Kontrolle eines Zutritts von Personen zu einem Haus oder zu bestimmten Bereichen in einem Haus oder in der Umgebung eines Hauses;
- automatisches Betreiben (Schalten, Steuern, Regeln) von Audio-, Video- oder Multimedia-Anlagen in einem oder mehreren Räumen.

Auf dem Gebiet der Automation von Häusern gibt es Anwendungen, bei denen haustechnischen Einrichtungen der vorstehend genannten Art allenfalls als Funktion von Parametern gesteuert werden müssen, welche fest vorgegeben sind bzw. vorgegeben werden können und sich mit der Zeit nicht mehr verändern. Beispielsweise kann vorgesehen sein, zu vorgegebenen Zeitpunkten eine Beleuchtungseinrichtung oder Heizungseinrichtung oder eine Einrichtung zur Verriegelung von Türen an- oder auszuschalten. Bei diesen Anwendungen kann es beispielsweise angemessen sein, die jeweils an- oder auszuschaltende haustechnischen Einrichtung mit einer Recheneinheit zu versehen oder alternativ zu verbinden, welche ausgebildet ist, die jeweilige haustechnische Einrichtung an vorbestimmten oder vorbestimmbaren Zeitpunkten an- oder auszuschalten.

Auf dem Gebiet der Automation von Häusern gibt es allerdings eine Vielzahl von komplexeren Anwendungen, bei denen haustechnischen Einrichtungen der vorstehend genannten Art in Abhängigkeit von Parametern betrieben werden sollen, welche sich ändern können, beispielsweise unvorhersehbar (zufällig) an beliebigen Zeitpunkten. Ein Beispiel für derartige Anwendungen ist eine Steuerung einer Beleuchtungseinrichtung in einem Haus derart, dass verschiedene Lichtquellen entsprechend den momentanen Bedürfnissen von Benutzern an beliebigen Zeitpunkten an- oder ausgeschaltet werden können oder dass Lichtquellen angesteuert werden können, um die Intensität des erzeugten Lichts an beliebigen Zeitpunkten variieren zu können. Ein weiteres Beispiel für derartige Anwendungen ist eine Steuerung einer Heizungseinrichtung in einem Haus derart, dass eine Soll-Temperatur eines Raumes, welche mithilfe der Heizungseinrichtung realisierbar sein soll, entsprechend den momentanen Bedürfnissen von Benutzern an beliebigen Zeitpunkten variiert werden kann. In weiteren Beispielen für derartige Anwendungen kann vorgesehen sein, eine haustechnische Einrichtung in Abhängigkeit von zufällig veränderbaren Parametern zu steuern, deren Veränderung mit messtechnischen Mitteln registrierbar ist. Letzteres betrifft beispielsweise eine Steuerung von Markisen, Sonnendächern, Jalousien, Rollläden oder Verdunkelungssystemen in Abhängigkeit von einer Helligkeit des vorhandenen Lichts oder einer Windgeschwindigkeit in der Umgebung eines Hauses oder eine Steuerung einer Heizeinrichtung eines Hauses in Abhängigkeit von einer Aussentemperatur, welche in der Regel mit Zeit variiert.

Um komplexe Anwendungen von haustechnischen Einrichtungen der vorstehend genannten Art auf möglichst einfache Art automatisiert betreiben zu können, wurden beispielsweise Vorrichtungen zur Automation eines Hauses konzipiert, welche modular aus verschiedenen standardisierten Komponenten zusammensetzbar sind, die jeweils verschiedene technische Funktionen bereitstellen, um verschiedene funktionelle Aspekte der Automation weitgehend unabhängig voneinander realisieren zu können. Derartige Vorrichtungen zur Automation eines Hauses umfassen als standardisierte Komponenten insbesondere Sensoren und Aktoren.

Ein "Aktor" ist in diesem Zusammenhang als eine Einrichtung zu verstehen, welche ausgebildet ist, mindestens eine haustechnische Einrichtung anzusteuern. Eine haustechnische Einrichtung, welche unter Kontrolle der Vorrichtung zur Automation betrieben werden soll, ist demensprechend mit einem Aktor zu verbinden, wobei der Aktor ausgebildet ist, Steuersignale zum Ansteuern der haustechnische Einrichtung bereitzustellen.

Ein "Sensor" ist in diesem Zusammenhang als eine Einrichtung zu verstehen, welche in verschiedene Zustände bringbar ist, wobei vorgesehen ist, mindestens eine haustechnische Einrichtung in Abhängigkeit von einem momentanen Zustand des Sensors (d.h. von dem Zustand, in den der Sensor an einem bestimmten Zeitpunkt gebracht ist) zu steuern. Beispiele für einen "Sensor" sind u.a.: ein bedienbarer Schalter zum An- und Ausschalten einer Beleuchtungseinrichtung, eine bedienbare Benutzerschnittstelle zur Auswahl eines bestimmten Betriebsmodus aus einer Mehrzahl von Betriebsmodi einer haustechnischen Einrichtung oder eine Messeinrichtung zum Erfassen mindestens eines Parameters (z.B. Temperatur, Helligkeit, Windgeschwindigkeit in der Umgebung eine Hauses, Anwesenheit einer Person).

Um mittels Sensoren und Aktoren der vorstehend genannten Art haustechnische Einrichtung als Funktion von momentanen Zuständen der Sensoren ansteuern zu können, ist es erforderlich, die momentanen Zustände einzelner Sensoren in Steuersignale umzusetzen, welche von bestimmten Aktoren zur Ansteuerung der jeweiligen haustechnische Einrichtung bereitgestellt werden müssen. Bekannte Vorrichtungen zur Automation eines Hauses sind zu diesem Zweck beispielsweise derart konzipiert, dass alle Aktoren und Sensoren über ein Bussystem verbunden sind, welches eine Übertragung von Daten (bzw. Signalen) ermöglicht. Das Bussystem ermöglicht hierbei eine Kommunikation von Informationen zwischen Sensoren und Aktoren (z.B. eine Übermittlung von Informationen über den momentanen Zustand der jeweiligen Sensoren und/oder den Zustand der jeweiligen Aktoren).

Vorrichtungen zur Automation eines Hauses, welche auf einer Kombination von Sensoren, Aktoren und einem Bussystem beruhen, sind mittlerweile weltweit im Einsatz. Dementsprechend wurden inzwischen Industriestandards etabliert, welche eine Standardisierung derartiger, ein Bussystem umfassenden Vorrichtungen ermöglichen. In der Haus- und Gebäudesystemtechnik gemäss Stand der Technik ist beispielsweise eine Kommunikation zwischen Sensoren und Aktoren gemäss KNX-Standard (einem offenen Standard gemäss der europäischen Norm EN50090 bzw. der internationalen Norm ISO/IEC 14543-3) etabliert. Dabei werden Sensoren und Aktoren über einen "KNX-Bus", d.h. einem Bus gemäss KNX-Standard, leitungsgebunden oder drahtlos "verbunden", wobei jeweils Sensoren mit den entsprechenden Aktoren direkt miteinander kommunizieren. Zum Zwecke der Kommunikationen senden sich die kommunizierenden Vorrichtungen (d.h. ein Sensor und der entsprechende Aktor) gegenseitig bestimmte Signale bzw. Folgen von Signalen zu, welche einem bestimmten Kommunikations-Protokoll genügen müssen.

Falls beispielsweise ein Sensor (z.B. ein Lichtschalter zum An- bzw. Abschalten einer Beleuchtung) registriert, dass ein bestimmter Aktor angesteuert werden soll (z.B. Anschalten der Beleuchtung nach Betätigung des Lichtschalters durch eine Person), muss selbsttätig eine direkte Kommunikation von Daten bzw. Signalen zwischen dem Sensor und dem entsprechenden Aktor stattfinden, um den Aktor zu veranlassen, eine gewünschte bzw. vorbestimmte Aktion zur Ansteuerung einer haustechnischen Einrichtung auszuführen.

Diese direkte Kommunikation zwischen Sensoren und Aktoren führt zu einer Reihe von Problemen.

Um eine selbsttätige direkte Kommunikation zwischen Sensoren und Aktoren über einen KNX-Bus zu ermöglichen, müssen die jeweiligen Sensoren bzw. Aktoren ein hohes Mass an "Intelligenz" aufweisen, d.h. jeder Sensor und jeder Aktor muss in der Regel eine Elektronik aufweisen, welche elektronische Einrichtungen zum Erzeugen der zu sendenden Signale und zum Empfangen der zu empfangenden Signale und insbesondere einen Prozessor zum Steuern dieser elektronischen Einrichtungen umfasst. Die Prozessoren der jeweiligen Sensoren bzw. Aktoren müssen insbesondere sicherstellen, dass die jeweils zu sendenden Signale dem massgeblichen Kommunikations-Protokoll entsprechen, und eine aufwändige Auswertung der jeweils empfangenen Signale durchführen, um zu ermöglichen, dass ein Sensor mit einem Aktor zuverlässig interaktiv zusammenwirken kann. Aus den vorstehend genannten Gründen ist die Elektronik der jeweiligen Sensoren und Aktoren komplex, die Sensoren und Aktoren sind entsprechend teuer.

Um eine zuverlässige Übertragung von Daten bzw. Signalen zwischen Sensoren und Aktoren über einen KNX-Bus zu gewährleisten, müssen die jeweils miteinander kommunizierenden Sensoren und Aktoren sich gegenseitig zeitlich nacheinander bestimmte Folgen von Signalen zusenden, was eine bidirektionale Kommunikation zwischen den jeweils miteinander kommunizierenden Sensoren und Aktoren erfordert. Diese bidirektionale Kommunikation ist zeitaufwändig und hat beispielsweise zur Folge, dass eine Datenübertragung über einen KNX-Bus relativ langsam, d.h. mit einer relativ geringen Datenrate, erfolgt. Dies ist insbesondere limitierend, wenn eine grosse Anzahl von Sensoren und Aktoren über einen KNX-Bus verbunden werden. Dabei können insbesondere kritische Situationen entstehen, wenn eine grosse Anzahl von Sensoren veranlasst werden sollten, im Wesentlichen gleichzeitig mit einer entsprechend grossen Anzahl von Aktoren eine bidirektionale Kommunikation von Daten über einen (einzigen, d.h. denselben) KNX-Bus zu starten. Hierbei sind Konflikte zwischen einer Kommunikation eines Sensors mit einem bestimmten Aktor und einer Kommunikation anderer Sensoren mit anderen Aktoren unvermeidlich. Derartige Konflikte können zu einem instabilen Betrieb einer auf einem KNX-Bus basierenden Vorrichtung zur Automation eines Hauses führen und somit die Funktionsfähigkeit dieser Vorrichtung beeinträchtigen.

Ein instabiler Betrieb einer auf einem KNX-Bus basierenden Vorrichtung zur Automation eines Hauses kann ebenfalls von elektrischen Störungen (z.B. von Starkstromleitungen erzeugte elektromagnetische Felder, elektromagnetische Wellen) verursacht werden, zumal derartige Störungen die Übertragung von Daten über den Bus beeinflussen können. Ein Sensor einer derartigen Vorrichtung ist nämlich in der Regel derart konzipiert, dass der Sensor eine Änderung seines Zustands in einem einmaligen Vorgang an einen dem Sensor zugeordneten Aktor kommuniziert, indem der Sensor an den zugeordneten Sensor über den KNX-Bus einmal Daten übermittelt, welche eine Information über die Änderung des Zustands des Sensors enthält. Falls in diesem Fall während der Übermittlung der Daten elektrische Störungen auf den KNX-Bus einwirken, besteht die Gefahr, dass der zugeordnete Aktor die übermittelten Daten nicht korrekt oder nur unvollständig empfangen kann oder gegebenenfalls überhaupt keine Daten empfangen kann. Aufgrund der Störungen ist somit nicht gewährleistet, dass der Aktor auf die vom Sensor übermittelten Daten in einer vorbestimmten Weise reagieren kann. Insbesondere besteht die Gefahr, dass der Aktor eine haustechnische Einrichtung aufgrund der Störungen nicht auf eine den übermittelten Daten entsprechende Weise ansteuert oder unter Umständen überhaupt nicht ansteuert. Dies beeinträchtigt die Funktionsfähigkeit der Vorrichtung zur Automation.

Weiterhin ist es bei einer Installation einer auf einem KNX-Bus basierenden Vorrichtung zur Automation eines Hauses vor einer ersten Inbetriebnahme der Vorrichtung in der Regel notwendig, alle Sensoren und Aktoren, welche über den KNX-Bus kommunizieren sollen, jeweils einzeln zu konfigurieren bzw. programmieren, um sicherzustellen, dass jeder Sensor mit einem bestimmten, diesem Sensor zugeordneten Aktor auf eine vorbestimmte Weise kommunizieren kann. Die Durchführung der Konfiguration bzw. Programmierung aller einzelnen Sensoren und Aktoren vor der ersten Inbetriebnahme ist aufwändig und anspruchsvoll für das an der Installation beteiligte Personal. Der Aufwand ist umso grösser, je grösser die Anzahl der Sensoren und Aktoren ist.

Als Alternativen zu einem KNX-Bus sind noch andere Bussysteme (z.B. DALI, AMX, TCP/IP) bekannt, die derart ausgelegt sind, dass selbsttätig eine bidirektionale Kommunikation zwischen Sensoren und Aktoren über das entsprechende Bussystem stattfinden muss. Um diese Kommunikation zu ermöglichen, müssen die Sensoren und Aktoren auch bei diesen Bussystemen über eine komplexe, ein hohes Mass an "Intelligenz" aufweisende Elektronik verfügen. Die vorstehend genannten Bussysteme führen dementsprechend ebenfalls zu den Nachteilen, welche oben im Zusammenhang mit einer auf einem KNX-Bus basierenden Vorrichtung zur Automation eines Hauses genannt sind.

Eine am 25. Oktober 2016 archivierte "Webseite Bihl+Wiedemann - Gebäudeautomation", welche am 28. August 2017 unter der Internet-Adresse https://web.archive.org/web/20161025105153/ http://bihl-wiedemann.de/de/applikationen/gebaeudeautoma tion.html auffindbar war, offenbart eine Anwendung eines unter der Bezeichnung "AS-Interface" (bzw. "Actuator Sensor Interface" oder "AS-i") bekannten genormten, industriellen Verdrahtungssystems für die Automatisierung auf dem Gebiet der Gebäudeautomation. Dieses Verdrahtungssystem ermöglicht eine Vernetzung von Aktuatoren und Sensoren über einen Bus ("As-i Bus") nach einem Master/Slave Prinzip. Hierzu kann ein sogenanntes Master-Modul ("AS-i Master") über einen As-i Bus mit einer Mehrzahl von sogenannten Slave-Modulen ("As-i Slaves") verbunden werden. Das AS-i Master-Modul dient der Steuerung aller an den As-i Bus angeschlossenen Einrichtungen und fungiert zu diesem Zweck als direkte Schnittstelle zu einer übergeordneten Steuerung (DDC, GLT, SPS etc.) oder kann in Kombination mit einer integrierten speicherprogrammierbaren Steuerung (Klein-SPS) auch zur Vorverarbeitung oder autark als "Stand-Alone-Gerät" ohne übergeordnete Steuerung nutzbar sein. Alle AS-i Slave-Module lassen sich mit Hilfe eines einzigen zweiadrigen Rund- oder Flachkabels (AS-i Kabel) bei freier Wahl der Topologie mit dem AS-i Master-Modul verbinden. Über dasselbe AS-i Kabel werden Daten und Energie übertragen, wobei jedes AS-i Slave-Modul eine eigene Adresse für den Zugriff auf seine Daten erhält. Für eine Anwendung auf dem Gebiet der Gebäudeautomation stehen insbesondere an den AS-i Bus anschliessbare AS-i Slave-Module zur Verfügung, welche eine Ansteuerung von Lüftungsklappen über digitale Ausgänge oder einer Ansteuerung von Brandschutz-/Entrauchungsklappen oder Heiz-/Kühldecken über analoge Ausgänge ermöglichen. Für eine Anbindung von Sensoren stehen an den AS-i Bus anschliessbare AS-i Slave-Module zur Verfügung, welche als digitale Eingangs-/Ausgangsmodule (E/A-Module) ausgebildet sind und beispielsweise Eingänge zum Anschliessen von Sensoren aufweisen. Für eine Anbindung von Funk-Tastern und Funk-Sensoren stehen an den AS-i Bus anschliessbare AS-i Slave-Module zur Verfügung, welche ausgebildet sind, von Funk-Tastern oder Funk-Sensoren gesendete Funksignale über eine entsprechende Funk-Schnittstelle ("EnOcean Gateway") zu empfangen.

Eine Publikation "Webserver zur Temparaturmessung" vom 17. Oktober 2005, verfügbar im Internet unter der Adresse https://www.mikrocontroller.net/topic/31408, offenbart eine Verwendung eines Webservers zur Temperaturmessung, wobei ein Temperatursensor über einen "1-wire Bus" (auch bekannt als "One-Wire Bus" oder "Eindraht-Bus") mit einem Webserver verbunden ist.

Die Offenlegungsschrift DE 19927635 A1 offenbart ein Automatisierungssystem, welches ein Bussystem, daran angeschlossene Busteilnehmer mit zugeordneten Sensoren und Aktoren und eine Standardsteuerungseinrichtung umfasst, wobei die Standardsteuerungseinrichtung die Prozesssteuerung mit der Verarbeitung von prozessgebundenen Ein-/Ausgabe-Daten (E/A-Daten) und eine sicherheitsbezogene Steuerung mit der Verarbeitung von sicherheitsbezogenen Daten, d.h. der Steuerung von sicherheitsbezogenen Ein- und Ausgängen, durchführt. Für die Prozesssteuerung empfängt die Standardsteuerungseinrichtung Daten von den einzelnen Busteilnehmern, welche wiederum selbst von der Standardsteuerungseinrichtung Daten empfangen. Weiterhin ist die Standardsteuerungseinrichtung ausgebildet, sicherheitsbezogene Daten zu verarbeiten und zu diesem Zweck auch die Verarbeitung der sicherheitsrelevanten Ein- und Ausgänge zu übernehmen. Beispielsweise ist der Drehzahlsensor einer Drehmaschine, welche über einen der Busteilnehmer an den Bus angeschlossen ist, ein derartiger sicherheitsrelevanter Eingang, da die Drehmaschine nicht über eine vorgegebene Grenze drehen darf. Ein weiteres Beispiel für einen sicherheitsbezogenen Eingang in der beschriebenen Ausführungsform ist ein Photodetektor einer Lichtschranke, mit welcher der Arbeitsbereich der Drehmaschine überwacht wird. Beispielsweise kann die Standardsteuerungseinrichtung einen Abschaltbefehl für die erwähnte Drehmaschine über den Bus zum zugeordneten Busteilnehmer absenden, wenn die Höchstdrehzahl überschritten wurde und damit eine Gefahr besteht, dass die Anlage außer Kontrolle gerät. Der Bus kann ein nach dem Master-Slave-Prinzip arbeitendes System sein, wobei die Standardsteuerungseinrichtung als Master und die einzelnen Busteilnehmer als Slaves fungieren.

Ein in der Enzyklopädie Wikipedia am 31. Mai 2017 zugänglich gemachter Artikel "Speicherprogrammierbare Steuerung", welcher am 28. August 2017 unter der Internet-Adresse https://de.wikipedia.org/w/index.php?title=Speicherprogram mierbare_Steuerung&oldid=165967031#SPS-Zust.C3.A4nde auffindbar war, offenbart ein als "Speicherprogrammierbare Steuerung" (SPS) bezeichnetes Gerät, das zur Steuerung oder Regelung einer Maschine oder Anlage eingesetzt und auf digitaler Basis programmiert wird. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Die Anbindung der SPS an die Maschine oder Anlage erfolgt mit Sensoren und Aktoren. Hinzu kommen Statusanzeigen. Die Sensoren sind an die Eingänge der SPS geschaltet und vermitteln der SPS das Geschehen in der Maschine oder Anlage. Beispiele für Sensoren sind z. B. Taster, Lichtschranken, Inkrementalgeber, Endschalter, oder auch Temperaturfühler, Füllstandssensoren etc. Die Aktoren sind an den Ausgängen der SPS angeschlossen und bieten die Möglichkeit, die Maschine oder Anlage zu steuern. Beispiele für Aktoren sind Schütze zum Einschalten von Elektromotoren, elektrische Ventile für Hydraulik oder Druckluft, aber auch Module für Antriebssteuerungen (Motion Control, Drehzahlsteuerung mit kontrollierter Beschleunigung oder Verzögerung, Schrittmotorsteuerungen).

Die Publikation Kriesel et al., "AS-Interface Das Aktuator-Sensor-Interface für die Automation", 1. Januar 1994, Seiten 55-67, XP002273144, offenbart Einzelheiten eines integrierten Schaltkreises, welcher als "AS-Interface-Slave-Chip" zur Kopplung von Sensoren oder Aktoren an eine Busleitung dient.

Das Dokument AS-Interface Spec. V3.0 Compliant Universal ASi IC", Integrated Device Technology, Inc., 26. Januar 2016, XP055503353, 6024 Silver Creek Valley Road, San Jose, CA 95138, gefunden im Internat unter URL:https://ja.idt.com/document/dst/asi4u-datasheet, offenbart eine Spezifikation für eine integrierte CMOS-Schaltung, welche in AS-i Master- und Slave-Modulen als Schnittstelle (Interface) zur Ankopplung an eine Busleitung dient und beispielsweise verschiedene Möglichkeiten zum Eingeben, Ausgeben, Verarbeiten und Filtern von Daten ermöglicht.

### Zusammenfassung der Erfindung

Der vorliegenden Erfindung liegt die Aufgabe zugrunde, die genannten Nachteile zu vermeiden und insbesondere eine Vorrichtung zur Automation eines Hauses zu schaffen, welche eine einfache Realisierung einer Verbindung von Sensoren und Aktoren auf der Grundlage eines Bussystems zum Ansteuern mindestens einer haustechnischen Einrichtung mit einer Beleuchtungseinrichtung, einer Anordnung von mindestens einer Jalousie und/oder einer Heizeinrichtung zum Heizen von mindestens einem Raum ermöglicht und dabei ein Erfassen der Sensor-Zustandsinformationen für alle Sensoren und ein Übermitteln von Aktor-Steuersignalen an die Aktoren mit besonders hohen Datenraten gewährleistet.

Diese Aufgabe wird gelöst durch eine Vorrichtung zur Automation eines Hauses mit den Merkmalen des Patentanspruchs 1.

Diese Vorrichtung zur Automation eines Hauses umfasst mindestens einen Aktor zum Ansteuern mindestens einer haustechnischen Einrichtung; mindestens einen Sensor, welcher in verschiedene Zustände bringbar ist und eine Messeinrichtung zum Registrieren eines momentanen Zustands des Sensors und einen Speicher aufweist, wobei die verschiedenen Zustände des Sensors zumindest einen ersten Zustand und einen zweiten Zustand umfassen und der Speicher dazu ausgebildet, nach einem Registrieren eines momentanen Zustands des Sensors mittels der Messeinrichtung in dem Speicher eine Sensor-Zustandsinformation zu speichern, welche dem von der Messeinrichtung registrierten momentanen Zustand des Sensors entspricht; eine Recheneinheit und eine busartige Datenübertragungseinrichtung, über welche die Recheneinheit mit dem mindestens einen Sensor und dem mindestens einen Aktor verbunden ist. Die Recheneinheit der Vorrichtung umfasst eine Steuereinrichtung, welche ausgebildet ist, über die busartige Datenübertragungseinrichtung an den mindestens einen Aktor ein Aktor-Steuersignal zu übermitteln, mit welchem der mindestens eine Aktor aktivierbar ist, die mindestens eine haustechnische Einrichtung anzusteuern.

Weiterhin umfasst die Recheneinheit Speicher-Zugriffsmittel, welche ausgebildet sind, einen Zugriff auf den Speicher des mindestens einen Sensors über die busartige Datenübertragungseinrichtung durchzuführen, sodass eine im Speicher des mindestens einen Sensors gespeicherte Sensor-Zustandsinformation von der Recheneinheit erfassbar ist.

Weiterhin ist die Steuereinrichtung der Recheneinheit ausgebildet, den mindestens einen Aktor in Abhängigkeit von einer von der Recheneinheit erfassten Sensor-Zustandsinformation derart anzusteuern, dass die Steuereinrichtung ein erstes Aktor-Steuersignal über die busartige Datenübertragungseinrichtung an den mindestens einen Aktor übermittelt, falls die von der Recheneinheit erfasste Sensor-Zustandsinformation dem ersten Zustand des mindestens einen Sensors entspricht, und entweder kein Aktor-Steuersignal oder ein vom ersten Aktor-Steuersignal verschiedenes zweites Aktor-Steuersignal über die busartige Datenübertragungseinrichtung an den mindestens einen Aktor übermittelt, falls die von der Recheneinheit erfasste Sensor-Zustandsinformation dem zweiten Zustand des mindestens einen Sensors entspricht.

Weiterhin sind die Speicher-Zugriffsmittel steuerbar, den Zugriff auf den Speicher des mindestens einen Sensors wiederholt an mehreren aufeinanderfolgenden Zeitpunkten durchzuführen, und die Recheneinheit ist ausgebildet, nach jedem Zugriff der Speicher-Zugriffsmittel die jeweils im Speicher des mindestens einen Sensors gespeicherte Sensor-Zustandsinformation zu erfassen.

Hierbei sind die mindestens eine haustechnische Einrichtung und der mindestens eine Sensor gemäss einer der folgenden Alternativen (a)-(c) ausgebildet:
(a) die mindestens eine haustechnische Einrichtung ist eine Beleuchtungseinrichtung und der mindestens eine Sensor ist als bedienbarer Schalter ausgebildet, welcher in verschiedene Zustände bringbar ist, um mindestens eine Lichtquelle der Beleuchtungseinrichtung an- oder auszuschalten oder hinsichtlich der Helligkeit des mittels der Lichtquelle erzeugten Lichts zu regeln;
(b) die mindestens eine haustechnische Einrichtung ist eine Anordnung von mindestens einer Jalousie und der mindestens eine Sensor ist als bedienbare Vorrichtung ausgebildet, die in verschiedene Zustände bringbar ist, welche Soll-Positionen der mindestens einen Jalousie definieren;
(c) die mindestens eine haustechnische Einrichtung ist eine Heizeinrichtung zum Heizen von mindestens einem Raum und der mindestens eine Sensor ist als bedienbare Vorrichtung ausgebildet, die in verschiedene Zustände bringbar ist, welche mittels der Heizeinrichtung in dem mindestens einen Raum zu erreichende Solltemperaturen definieren.

Gemäss der Erfindung umfasst die busartige Datenübertragungseinrichtung einen ersten Bus und einen vom ersten Bus separaten zweiten Bus. Weiterhin ist jeder Sensor mit der Recheneinheit über den ersten Bus verbunden, sodass eine leitungsgebundene Übertragung von Daten oder Signalen zwischen der Recheneinheit und dem Sensor über den ersten Bus ermöglicht ist und jeder Zugriff der Speicher-Zugriffsmittel auf den Speicher des Sensors über den ersten Bus durchführbar ist, und jeder Aktor ist mit der Recheneinheit über den zweiten Bus verbunden, sodass eine leitungsgebundene Übertragung von Daten oder Signalen zwischen der Recheneinheit und dem Aktor über den zweiten Bus ermöglicht ist und jedes Aktor-Steuersignal von der Steuereinrichtung der Recheneinheit an den Aktor über den zweiten Bus übermittelbar ist.

In diesem Zusammenhang bezeichnet "busartige Datenübertragungseinrichtung" eine Einrichtung, welche mindestens einen für eine Übertragung von Daten bzw. entsprechenden Signalen geeigneten Bus umfasst.

Dadurch, dass die Vorrichtung zur Automation eine busartige Datenübertragungseinrichtung aufweist, über welche die Recheneinheit mit dem mindestens einen Sensor und dem mindestens einen Aktor verbunden ist, ist demnach eine Übertragung von Daten bzw. entsprechenden Signalen über mindestens einen Bus vorgesehen. Im Hinblick auf ein "Zusammenwirken" zwischen dem mindestens einen Sensor und dem mindestens einen Aktor hat die Recheneinheit im Rahmen der Erfindung eine zentrale Funktion. Um den mindestens einen Aktor zu aktivieren, eine diesem Aktor zugeordnete haustechnische Einrichtung anzusteuern, muss die Steuereinrichtung der Recheneinheit ein entsprechendes Steuersignal - hier "Aktor-Steuersignal" genannt - über die busartige Datenübertragungseinrichtung an den mindestens einen Aktor senden. Diese Aktivierung des mindestens einen Aktors findet demnach unter der Kontrolle der Recheneinheit statt.

Um eine Aktivierung des mindestens einen Aktors in Abhängigkeit von verschiedenen Zuständen des mindestens einen Sensors zu ermöglichen, umfasst der mindestens eine Sensor eine Messeinrichtung, welche einen momentanen Zustand des Sensors (d.h. den Zustand, in den der Sensor an einem bestimmten Zeitpunkt gebracht ist) registriert, und einen Speicher, in welchem - nachdem ein momentaner Zustand des Sensors von der Messeinrichtung registriert wurde - eine Sensor-Zustandsinformation gespeichert wird, welche den von der Messeinrichtung registrierten momentanen Zustand des Sensors charakterisiert. Demnach enthält der Speicher des Sensors eine Information darüber, in welchen der verschiedenen Zustände, in die der Sensor gebracht werden kann, tatsächlich gebracht ist (an dem Zeitpunkt, an dem der momentane Zustand des Sensors von der Messeinrichtung registriert wurde).

Es ist allerdings nicht vorgesehen, dass der mindestens eine Sensor nach dem Registrieren eines momentanen Zustands des Sensors selbsttätig in Aktion treten muss, um eine Information über den registrierten Zustand des Sensors über die busartige Datenübertragungseinrichtung an den mindestens einen Aktor zu übermitteln. Dadurch, dass die Recheneinheit Speicher-Zugriffsmittel aufweist, welche ausgebildet sind, einen Zugriff auf den Speicher des mindestens einen Sensors über die busartige Datenübertragungseinrichtung durchzuführen, wird erreicht, dass die Recheneinheit die im Speicher des Sensors gespeicherte Sensor-Zustandsinformation über die busartige Datenübertragungseinrichtung erfassen kann, und zwar an einem Zeitpunkt, welcher von der Recheneinheit vorgegeben werden kann. Dadurch, dass die Steuereinrichtung der Recheneinheit ausgebildet ist, den mindestens einen Aktor in Abhängigkeit von einer von der Recheneinheit erfassten Sensor-Zustandsinformation anzusteuern, hat die Recheneinheit die Funktion, auf der Grundlage der im Speicher des mindestens einen Sensors gespeicherten Sensor-Zustandsinformation gegebenenfalls eine Aktivierung des mindestens Aktors zu veranlassen (gegebenenfalls durch Senden eines entsprechenden Aktor-Steuersignals von der Steuereinrichtung der Recheneinheit an den mindestens einen Aktor über die busartige Datenübertragungseinrichtung).

Dass die Steuereinrichtung der Recheneinheit den mindestens einen Aktor "in Abhängigkeit von einer von der Recheneinheit erfassten Sensor-Zustandsinformation" ansteuern kann, kommt hierbei dadurch zum Ausdruck, dass vorgesehen ist, dass der mindestens eine Sensor in zumindest zwei bestimmte, verschiedene Zustände - z.B. einen ersten Zustand oder einen zweiten Zustände - gebracht werden kann, wobei die Steuereinheit - abhängig davon, ob sich der mindestens eine Sensor in einem der beiden bestimmten Zustände oder in dem anderen der beiden bestimmten Zustände befindet - auf unterschiedliche Weisen reagiert: Die Steuereinrichtung übermittelt ein erstes Aktor-Steuersignal über die busartige Datenübertragungseinrichtung an den mindestens einen Aktor, falls die von der Recheneinheit erfasste Sensor-Zustandsinformation dem ersten Zustand des mindestens einen Sensors entspricht; alternativ übermittelt die Steuereinrichtung an den mindestens einen Aktor entweder kein Aktor-Steuersignal oder ein vom ersten Aktor-Steuersignal verschiedenes zweites Aktor-Steuersignal, falls die von der Recheneinheit erfasste Sensor-Zustandsinformation dem zweiten Zustand des mindestens einen Sensors entspricht. Die jeweilige Reaktion der Steuereinrichtung der Recheneinheit (Übermitteln eines ersten Aktor-Steuersignals und alternativ keine Übermittlung eines Aktor-Steuersignals oder Übermittlung eines zweiten, vom ersten Aktor-Steuersignal verschiedenes Aktor-Steuersignals) ist demnach mit verschiedenen Zuständen, welche der Sensor momentan annehmen kann, korreliert. Entsprechend ist die jeweilige Ansteuerung des mindestens einen Aktors (Empfangen des ersten Aktor-Steuersignals und alternativ Empfangen keines Aktor-Steuersignals oder eines zweiten, vom ersten Aktor-Steuersignal verschiedenen Aktor-Steuersignals) mit verschiedenen Zuständen, welche der Sensor momentan annehmen kann, korreliert.

Diese Ausbildung der Vorrichtung zur Automation eines Hauses hat den Vorteil, dass der mindestens eine Sensor und der mindestens eine Aktor nicht ausgebildet sein müssen, selbsttätig eine direkte (bidirektionale) Kommunikation von Daten zwischen dem Sensor und dem Aktor durchzuführen. Weder der Sensor noch der Aktor müssen deshalb mit einer ein hohes Mass an "Intelligenz" aufweisenden Elektronik ausgestattet sein, welche - wie oben erwähnt - erforderlich wäre, um Sensoren und Aktoren eine selbsttätige direkte (bidirektionale) Kommunikation über einen KNX-Bus oder über einen anderen Bus auf der Grundlage einer anderen "intelligenten" Bus-Technologie zu ermöglichen.

Mit anderen Wort: Im Falle der erfindungsgemässen Vorrichtung zur Automation eines Hauses kann jeder Sensor und jeder Aktor mit einer relativ einfachen und somit kostengünstigen Elektronik ausgestattet sein. Hingegen hat die Recheneinheit die Rolle einer "zentralen Intelligenz", welche den zeitlichen Verlauf einer Umsetzung eines registrierten momentanen Zustands des mindestens einen Sensors in eine entsprechende Ansteuerung des mindestens einen Aktors zur Aktivierung des Aktors bestimmt.

Der Speicher des mindestens einen Sensors muss nicht notwendigerweise geeignet sein, Daten auf nichtflüchtige Weise zu speichern. Alternativ kann der Speicher des mindestens einen Sensors als ein nichtflüchtiger Datenspeicher ausgebildet sein. Falls der Speicher des Sensors ein nichtflüchtiger Datenspeicher ist, kann dies insbesondere vorteilhaft sein, falls die Energieversorgung des Sensors ausfallen sollte. Falls der Speicher des Sensors ein nichtflüchtiger Datenspeicher ist, bleibt bei Ausfall der Energieversorgung die Sensor-Zustandsinformation, welche dem momentanen Zustand des Sensors entspricht, der zuletzt vor dem Ausfall der Energieversorgung von der Messeinrichtung des Sensors registriert wurde, auch nach Ausfall der Energieversorgung im Speicher des Sensors gespeichert. Auf diese Weise bleibt die Information darüber, in welchen Zustand der Sensor vor dem Ausfall der Energieversorgung gebracht war, im Speicher des Sensors erhalten. Nach Wiederherstellung der Energieversorgung ist die Vorrichtung zur Automation eines Hauses deshalb in der Lage, ihren Betrieb fortzusetzen auf der Grundlage der Sensor-Zustandsinformation, welche vor dem Stromausfall im Speicher gespeichert wurde. Dies macht die Vorrichtung zur Automation eines Hauses relativ unempfindlich gegenüber Störungen aufgrund eines Ausfalls der Energieversorgung.

Die Vorrichtung zur Automation eines Hauses ist insbesondere dadurch charakterisiert, dass die busartige Datenübertragungseinrichtung einen ersten Bus und einen vom ersten Bus separaten zweiten Bus umfasst, wobei die Recheneinheit mit jedem einzelnen Sensor über den ersten Bus verbunden ist und die Recheneinheit mit jedem einzelnen Aktor über den zweiten Bus verbunden ist. Dadurch wird erreicht, dass die Recheneinheit die Sensor-Zustandsinformationen ausschliesslich über den ersten Bus erfassen kann und Aktor-Steuersignale zum Aktivieren der Aktoren ausschliesslich über den zweiten Bus übermittelt werden können. Auf diese Weise ist es möglich, das Erfassen der Sensor-Zustandsinformationen und das Übermitteln der Aktor-Steuersignale im Wesentlichen gleichzeitig (als parallele Prozesse) durchzuführen. Weiterhin können die über den zweiten Bus übermittelten Aktor-Steuersignale nicht störend auf eine Erfassung der Sensor-Zustandsinformationen, welche über den ersten Bus erfolgt, einwirken. Dies ermöglicht ein Erfassen der Sensor-Zustandsinformationen für alle Sensoren und ein gleichzeitiges Übermitteln von Aktor-Steuersignalen an die Aktoren mit besonders hohen Datenraten.

Bei einer Ausführungsform der Vorrichtung zur Automation eines Hauses umfasst die Recheneinheit eine Auswerteeinrichtung, welche ausgebildet ist, eine Auswertung einer von der Recheneinheit erfassten Sensor-Zustandsinformation durchzuführen und als Ergebnis der Auswertung nach vorgegebenen Regeln zu ermitteln, ob der mindestens eine Aktor zum Ansteuern der mindestens einen haustechnischen Einrichtung aktiviert werden soll, und, falls das Ergebnis der Auswertung ist, dass der mindestens eine Aktor zum Ansteuern der mindestens einen haustechnischen Einrichtung aktiviert werden soll, die Steuereinrichtung zu veranlassen, ein entsprechendes Aktor-Steuersignal über die busartige Datenübertragungseinrichtung an den mindestens einen Aktor zu übermitteln. Eine "Auswertung einer von der Recheneinheit erfassten Sensor-Zustandsinformation" mittels der Auswerteeinrichtung kann in diesem Zusammenhang insbesondere umfassen, dass die Auswerteinrichtung ausgebildet ist, aus der von der Recheneinheit erfassten Sensor-Zustandsinformation zu ermitteln, in welchem Zustand (von mehreren möglichen, verschiedenen Zuständen, in welche der mindestens eine Sensor gebracht werden kann) sich der mindestens eine Sensor momentan befindet. Weiterhin kann vorgesehen sein, dass der mindestens eine Aktor mit einem bestimmten Aktor-Steuersignal angesteuert werden soll, wenn der mindestens eine Sensor in einen vorgegebenen Zustand oder in einen von mehreren vorgegebenen Zuständen gebracht ist. Diesbezüglich können in der Auswerteeinrichtung ein oder mehrere charakteristische Parameter implementiert sein, welche dasjenige Aktor-Steuersignal spezifizieren, mit welchem der mindestens eine Aktor angesteuert werden soll, wenn der mindestens eine Sensor in einen vorgegebenen Zustand oder in einen von mehreren vorgegebenen Zuständen gebracht ist. Die Auswertung "einer von der Recheneinheit erfassten Sensor-Zustandsinformation" kann in diesem Fall umfassen, den oder die charakteristischen Parameter zu ermitteln, welche dasjenige Aktor-Steuersignal spezifizieren, mit welchem der mindestens eine Aktor angesteuert werden soll, wenn der mindestens eine Sensor in einen Zustand gebracht ist, welcher der von der Recheneinheit erfassten Sensor-Zustandsinformation entspricht. Die Auswerteeinrichtung kann weiterhin ausgebildet sein, alle charakteristischen Parameter, welche eine bestimmtes Aktor-Steuersignal spezifizieren, der Steuereinrichtung zur Verfügung zu stellen, sodass die Steuereinrichtung ein entsprechendes Aktor-Steuersignal erzeugen und über die busartige Datenübertragungseinrichtung an den mindestens einen Aktor übermitteln kann.

Es sei darauf hingewiesen, dass die Auswerteeinrichtung ein integraler Bestandteil der Steuereinrichtung sein kann. Alternativ kann die Auswerteeinrichtung auch separat von der Steuereinrichtung angeordnet sein.

Bei einer Ausführungsform der Vorrichtung zur Automation eines Hauses sind die Speicher-Zugriffsmittel steuerbar, den Zugriff auf den Speicher des mindestens einen Sensors wiederholt an mehreren aufeinanderfolgenden Zeitpunkten durchzuführen, sodass die Recheneinheit ausgebildet ist, nach jedem Zugriff der Speicher-Zugriffsmittel die jeweils im Speicher des mindestens einen Sensors gespeicherte Sensor-Zustandsinformation zu erfassen. Weiterhin ist die Steuereinrichtung ausgebildet, nach jedem Zugriff der Speicher-Zugriffsmittel den mindestens einen Aktor in Abhängigkeit von der von der Recheneinheit jeweils erfassten Sensor-Zustandsinformation anzusteuern.

Wenn der mindestens eine Sensor im Lauf der Zeit von einem Zustand in einen anderen Zustand gebracht wird, so hat dies zur Folge, dass die Messeinrichtung des Sensors diese Änderung registriert, mit dem Ergebnis, das im Speicher des Sensors nach der Registrierung dieser Änderung eine (geänderte) Sensor-Zustandsinformation gespeichert wird. Dadurch, dass der Zugriff auf den Speicher des mindestens einen Sensors wiederholt an mehreren aufeinanderfolgenden Zeitpunkten durchgeführt wird, ist die Recheneinheit in der Lage, den jeweils aktuellen Zustand des Sensors als Funktion der Zeit zu erfassen und somit Änderungen des Zustands des Sensors durch wiederholte Zugriffe auf den Speicher des mindestens einen Sensors zu detektieren. Die Recheneinheit ist somit in der Lage, nach jedem Zugriff auf den Speicher den mindestens einen Aktor mit einem Aktor-Steuersignal anzusteuern, welches mit der jeweils von der Recheneinheit erfassten Sensor-Zustandsinformation korrespondiert.

Beispielsweise kann die Recheneinheit eine Auswerteeinrichtung umfassen, welche ausgebildet ist, nach jedem Zugriff der Speicher-Zugriffsmittel eine Auswertung der jeweils von der Recheneinheit erfassten Sensor-Zustandsinformation durchzuführen und als Ergebnis der Auswertung nach vorgegebenen Regeln zu ermitteln, ob der mindestens eine Aktor zum Ansteuern der mindestens einen haustechnischen Einrichtung aktiviert werden soll, und, falls das Ergebnis der Auswertung ist, dass der mindestens eine Aktor zum Ansteuern der mindestens einen haustechnischen Einrichtung aktiviert werden soll, die Steuereinrichtung zu veranlassen, ein entsprechendes Aktor-Steuersignal über die busartige Datenübertragungseinrichtung an den mindestens einen Aktor zu übermitteln. Dadurch, dass die Auswerteeinrichtung nach jedem Zugriff der Speicher-Zugriffsmittel eine Auswertung der jeweils von der Recheneinheit erfassten Sensor-Zustandsinformation durchzuführt, ist die Recheneinheit in der Lage, nach jedem Zugriff auf den Speicher zu überprüfen, ob eine Aktivierung des mindestens einen Aktors erforderlich ist, und gegebenenfalls eine Übermittlung eines entsprechenden Aktor-Steuersignals zu veranlassen. Dies ermöglicht eine Aktivierung des mindestens einen Aktors zur Ansteuerung einer haustechnischen Einrichtung entsprechend dem jeweils aktuellen Zustand, in den der mindestens eine Sensor momentan gebracht ist.

Die Wahl der aufeinanderfolgenden Zeitpunkte, an denen der Zugriff auf den Speicher des mindestens einen Sensors wiederholt werden sollte, ist davon abhängig, wie häufig damit zu rechnen ist, dass der mindestens eine Sensor in einen anderen Zustand gebracht werden könnte, und wie schnell der mindestens eine Aktor gegebenenfalls zum Ansteuern einer haustechnischen Einrichtung aktiviert werden müsste, nachdem der Sensor in einen anderen Zustand gebracht wurde. Im Hinblick auf typische Anforderungen auf dem Gebiet der Automation eines Hauses ist es meist hinreichend, den momentanen Zustand des mindestens einen Sensors wiederholt in regelmässigen zeitlichen Abständen von beispielsweise 0.1 Sekunden (entsprechend einer Wiederholrate von 10 Hz) zu überprüfen. Demensprechend ist es zweckmässig, den Zugriff auf den Speicher des mindestens einen Sensors wiederholt in regelmässigen zeitlichen Abständen von beispielsweise 0.1 Sekunden durchzuführen und die jeweils im Speicher gespeicherte Sensor-Zustandsinformation zu erfassen und auszuwerten.

Ein kontinuierliches bzw. in regelmässigen zeitlichen Abständen wiederholtes Erfassen der jeweils im Speicher gespeicherten Sensor-Zustandsinformation und ein in regelmässigen zeitlichen Abständen erfolgendes Ansteuern des Aktors mit entsprechenden Aktor-Steuersignalen löst zusätzlich die Problematik der Störanfälligkeit gegenüber elektrischen Störungen, welche die Funktionsfähigkeit von Vorrichtungen zur Automation eines Hauses gemäss dem Stand der Technik beeinträchtigen kann.

Sollte im Falle der vorstehend genannten Ausführungsform der Vorrichtung zur Automation eines Hauses nach einem Zugriff auf den Speicher des mindestens einen Sensors eine zeitlich limitierte (beispielsweise elektrische) Störung auftreten, welche dazu führt, dass die Recheneinheit die im Speicher des Sensors gespeicherte Sensor-Zustandsinformation nur unvollständig oder fehlerhaft oder überhaupt nicht erfassen kann, so ist eine derartige Störung unproblematisch: Da bei der vorstehend genannten Ausführungsform der Vorrichtung zur Automation eines Hauses der Zugriff auf den Speicher des Sensors ständig wiederholt wird (beispielsweise in Abständen von 0.1 Sekunden), ist die Recheneinheit in der Lage, unmittelbar nach dem Ende der Störung die im Speicher des Sensors gespeicherte Sensor-Zustandsinformation korrekt zu erfassen.

Da die Steuereinrichtung ferner ausgebildet ist, nach jedem Erfassen einer im Speicher des Sensors gespeicherten Sensor-Zustandsinformation ein mit der erfassten Sensor-Zustandsinformation korrespondierendes Aktor-Steuersignal an den Aktor zu übermitteln, ist gewährleistet, dass der Aktor kontinuierlich bzw. wiederholt in regelmässigen zeitlichen Abständen (beispielsweise in Abständen von 0.1 Sekunden) mit Aktor-Steuersignalen versorgt wird. Sollte bei einer Übermittlung der Aktor-Steuersignale über die busartiger Datenübertragungseinrichtung eine zeitlich limitierte Störung auftreten, welche dazu führt, dass der Aktor während der Störung die übermittelten Aktor-Steuersignale nur unvollständig oder fehlerhaft oder überhaupt nicht empfangen kann, so ist eine derartige Störung unproblematisch: Da bei der vorstehend genannten Ausführungsform der Vorrichtung zur Automation eines Hauses die Übermittlung der Aktor-Steuersignale ständig wiederholt wird (beispielsweise in Abständen von 0.1 Sekunden), ist der Aktor in der Lage, unmittelbar nach dem Ende der Störung die übermittelten Aktor-Steuersignale korrekt zu empfangen.

Auf diese Weise ist gewährleistet, dass der Aktor trotz auftretender Störungen Aktor-Steuersignale empfangen kann, welche dem jeweils aktuellen momentanen Zustand des mindestens einen Sensors entsprechen. Die vorstehend genannte Ausführungsform der Vorrichtung zur Automation eines Hauses ist deshalb vorteilhafterweise unempfindlich gegenüber zeitlich limitierten Störungen.

Bei einer anderen Ausführungsform der Vorrichtung zur Automation eines Hauses ist eine Mehrzahl des Sensors vorhanden und jeder der Sensoren in verschiedene Zustände bringbar, wobei die verschiedenen Zustände eines jeden Sensors zumindest einen ersten Zustand und einen zweiten Zustand umfassen. Weiterhin umfasst jeder der Sensoren eine Messeinrichtung zum Registrieren eines momentanen Zustands des Sensors und einen Speicher und ist dazu ausgebildet, nach einem Registrieren eines momentanen Zustands des Sensors mittels der Messeinrichtung des Sensors in dem Speicher eine Sensor-Zustandsinformation zu speichern, welche dem von der Messeinrichtung registrierten momentanen Zustand des Sensors entspricht. Dabei ist jeder der Sensoren über die busartige Datenübertragungseinrichtung mit der Recheneinheit verbunden und die Speicher-Zugriffsmittel sind ausgebildet, einen Zugriff auf den Speicher eines jeden der Sensoren über die busartige Datenübertragungseinrichtung durchzuführen, sodass jede Sensor-Zustandsinformation, welche in dem Speicher eines jeden der Sensoren gespeichert ist, von der Recheneinheit erfassbar ist. Auf diese Weise ist die Recheneinheit in der Lage, bei einer Vielzahl von Sensoren mittels der Speicher-Zugriffsmittel den momentanen Zustand jedes Sensors durch einen Zugriff auf den Speicher des jeweiligen Sensors abzufragen. Die Zugriffsmittel können insbesondere derart steuerbar sein, dass die Zugriffe auf die Speicher der verschiedenen Sensoren zeitlich nacheinander stattfinden. Die Sensoren benötigen keine komplexe, ein hohes Mass an "Intelligenz" aufweisende Elektronik, um Zugriffe auf die Speicher der einzelnen Sensoren zu ermöglichen. Die Recheneinheit ist dementsprechend in der Lage, alle Sensor-Zustandsinformationen, welche in den Speichern aller Sensoren gespeichert sind, mit einer hohen Datenrate über die busartige Datenübertragungseinrichtung zu erfassen. Dementsprechend ist die Recheneinheit in der Lage, die momentanen Sensor-Zustandsinformationen für eine grosse Anzahl von Sensoren in einer relativ kurzen Zeit zu erfassen.

Bei einer Weiterbildung der vorstehend genannten, mehrere Sensoren umfassenden Ausführungsform der Vorrichtung zur Automation eines Hauses sind die Speicher-Zugriffsmittel steuerbar, den Zugriff auf den Speicher eines jeden der Sensoren wiederholt an mehreren aufeinanderfolgenden Zeitpunkten durchzuführen, und jede Sensor-Zustandsinformation, welche im Speicher eines jeden der Sensoren jeweils gespeichert ist, ist von der Recheneinheit nach jedem Zugriff auf den Speicher erfassbar. Dadurch, dass der Zugriff auf den Speicher jedes einzelnen Sensors wiederholt durchgeführt wird, ist die Recheneinheit in der Lage, den momentanen Zustands jedes einzelnen Sensors als Funktion der Zeit zu erfassen und somit festzustellen, ob sich der momentane Zustand eines Sensors mit der Zeit verändert. Im Hinblick auf typische Anforderungen auf dem Gebiet der Automation eines Hauses ist es meist hinreichend, den momentanen Zustand des jedes einzelnen der Sensoren wiederholt in regelmässigen zeitlichen Abständen von beispielsweise 0.1 Sekunden zu überprüfen. Demensprechend ist es zweckmässig, den Zugriff auf den Speicher jedes einzelnen der Sensoren wiederholt in regelmässigen zeitlichen Abständen von beispielsweise 0.1 Sekunden durchzuführen und die jeweils im Speicher gespeicherte Sensor-Zustandsinformation zu erfassen und auszuwerten.

Eine andere Ausführungsform der Vorrichtung zur Automation eines Hauses weist eine Mehrzahl des Aktors auf, wobei die Recheneinheit mit jedem der Aktoren über die busartige Datenübertragungseinrichtung verbunden ist. Auf diese Weise können eine Mehrzahl verschiedener haustechnischen Einrichtungen mithilfe mehrerer Aktoren betrieben sein. Die verschiedenen Aktoren können selbstverständlich unterschiedlich ausgestaltet sein und unterschiedliche Funktionen aufweisen.

Eine Variante derjenigen Ausführungsform der Vorrichtung zur Automation eines Hauses, welche mehrere Sensoren und mehrere Aktoren aufweist, ist derart ausgebildet, dass jedem der Sensoren mindestens einer der Aktoren zugeordnet ist und die Recheneinheit eine Implementierung einer Sensor-Aktor-Zuordnung umfasst, welche für jeden der Sensoren eine Information darüber enthält, welcher der Aktoren dem Sensor zugeordnet ist. Weiterhin ist die Steuereinrichtung der Recheneinheit ausgebildet, mindestens einen Aktor, welcher einem der Sensoren zugeordnet ist, in Abhängigkeit von einer von der Recheneinheit erfassten Sensor-Zustandsinformation derart anzusteuern, dass die Steuereinrichtung ein erstes Aktor-Steuersignal über die busartige Datenübertragungseinrichtung an den mindestens einen Aktor, welcher dem einen der Sensoren zugeordnet ist, übermittelt, falls die von der Recheneinheit erfasste Sensor-Zustandsinformation dem ersten Zustand des einen der Sensoren entspricht, und entweder kein Aktor-Steuersignal oder ein vom ersten Aktor-Steuersignal verschiedenes zweites Aktor-Steuersignal über die busartige Datenübertragungseinrichtung an den mindestens einen Aktor übermittelt, falls die von der Recheneinheit erfasste Sensor-Zustandsinformation dem zweiten Zustand des einen der Sensoren entspricht.

Dadurch, dass die Recheneinheit die Implementierung einer Sensor-Aktor-Zuordnung umfasst, ist sichergestellt, dass die Recheneinheit über eine Information darüber verfügt, welcher Sensor bzw. welcher momentane Zustand eines Sensors für eine Aktivierung eines bestimmten Aktors massgeblich ist. Demensprechend muss keiner der Sensoren selbst über eine Information darüber verfügen, welcher der Aktoren dem jeweiligen Sensor zugeordnet ist bzw. welcher der Aktoren in Abhängigkeit von einem momentanen Zustand des jeweiligen Sensors gegebenenfalls aktiviert werden soll. Dies ist ein weiterer Grund dafür, dass die Sensoren selbst keine komplexe, ein hohes Mass an "Intelligenz" aufweisende Elektronik benötigen.

Beispielsweise kann die Recheneinheit eine Auswerteeinrichtung aufweisen, welche ausgebildet, für jeden einzelnen der Sensoren nach einem Erfassen einer im Speicher des jeweiligen Sensors gespeicherten Sensor-Zustandsinformation eine Auswertung der jeweils erfassten Sensor-Zustandsinformation durchzuführen und als Ergebnis der Auswertung nach vorgegebenen Regeln zu ermitteln, ob der mindestens eine Aktor, welcher dem jeweiligen Sensor gemäss der Sensor-Aktor-Zuordnung zugeordnet ist, zum Ansteuern mindestens einer haustechnischen Einrichtung aktiviert werden soll, und, falls das Ergebnis der Auswertung ist, dass der mindestens eine Aktor, welcher dem Sensor gemäss der Sensor-Aktor-Zuordnung zugeordnet ist, zum Ansteuern der mindestens einen haustechnischen Einrichtung aktiviert werden soll, die Steuereinrichtung zu veranlassen, ein entsprechendes Aktor-Steuersignal über die busartige Datenübertragungseinrichtung an den mindestens einen Aktor, welcher dem Sensor gemäss der Sensor-Aktor-Zuordnung zugeordnet ist, zu übermitteln.

Weiterbildungen der vorstehend genannten Ausführungsformen sind dadurch charakterisiert, dass die Recheneinheit einen Datenspeicher umfasst, in welchem eine von der Recheneinheit erfasste Sensor-Zustandsinformation speicherbar ist. Auf diese Weise können Sensor-Zustandsinformation aller Sensoren im Datenspeicher der Recheneinheit gespeichert werden. Der Datenspeicher der Recheneinheit ist vorzugsweise ein nichtflüchtiger Datenspeicher. Dies ist insbesondere vorteilhaft, falls die Energieversorgung des Sensors oder der Recheneinheit ausfallen sollte. Bei Ausfall der Energieversorgung bleiben die Sensor-Zustandsinformationen, welche den momentanen Zuständen der Sensoren entsprechen, die zuletzt vor dem Ausfall der Energieversorgung registriert wurden, auch nach Ausfall der Energieversorgung im Datenspeicher der Recheneinheit gespeichert. Dies macht die Vorrichtung zur Automation eines Hauses relativ unempfindlich gegenüber Störungen aufgrund eines Ausfalls der Energieversorgung.

Weiterbildungen der vorstehend genannten Ausführungsformen sind dadurch charakterisiert, dass jedem Sensor eine Adressinformation zugeordnet ist, welche jeden Sensor eindeutig identifiziert, und jeder Sensor ein Adressinformation-Speicherelement umfasst, welches die dem Sensor zugeordnete Adressinformation enthält.

Die vorstehend genannten Weiterbildungen können derart eingerichtet sein, dass die Recheneinheit einen Datenspeicher umfasst, in welchem für jeden Sensor Adressdaten gespeichert sind, welche die dem Sensor zugeordnete Adressinformation enthalten. Dieser Datenspeicher ist vorzugsweise ein nichtflüchtiger Speicher, damit die Adressdaten nach einer Inbetriebnahme der Vorrichtung zur Automation dauerhaft zur Verfügung stehen und selbst bei einem Ausfall der Energieversorgung der Recheneinheit erhalten bleiben.

Eine weitere Variante der vorstehend genannten Weiterbildungen ist dadurch charakterisiert, dass jeder Sensor von der Recheneinheit mittels eines Sensor-Steuersignals steuerbar ist, welches Sensor-Steuersignal die dem Sensor zugeordnete Adressinformation und eine Steuerinformation zum Steuern des Sensors enthält und mittels der Speicher-Zugriffsmittel der Recheneinheit erzeugbar und mittels der busartigen Datenübertragungseinrichtung zu jedem Sensor übertragbar ist, welcher über die busartige Datenübertragungseinrichtung mit der Recheneinheit verbunden ist.

Die vorstehend genannten Massnahmen erlauben es der Recheneinheit, einen bestimmten Sensor selektiv anzusteuern mithilfe eines über die busartige Datenübertragungseinrichtung übermittelten Sensor-Steuersignals, welches die Adressinformation enthält, die dem bestimmten Sensor zugeordnet ist. Das jeweilige Sensor-Steuersignal erreicht über die busartige Datenübertragungseinrichtung alle Sensoren, welche mit der busartigen Datenübertragungseinrichtung verbunden sind.

Eine Weiterbildung der vorstehend genannten Variante ist derart eingerichtet, dass jeder Sensor eine Busankopplungseinrichtung aufweist, welche ausgebildet ist, ein mittels der busartigen Datenübertragungseinrichtung übertragenes Sensor-Steuersignal zu empfangen und eine Steuerung des Sensors zu veranlassen, sofern die im empfangenen Sensor-Steuersignal enthaltene Adressinformation mit der Adressinformation identisch ist, welche dem Sensor zugeordnet ist, wobei die Busankopplungseinrichtung ausgebildet ist, die Steuerung des Sensors entsprechend der im empfangenen Sensor-Steuersignal enthaltenen Steuerinformation zu veranlassen. Die Busankopplungseinrichtung eines Sensors erlaubt es dem jeweiligen Sensor, selektiv auf mittels der busartigen Datenübertragungseinrichtung übertragene Sensor-Steuersignale zu reagieren. Eine entsprechende Reaktion eines Sensors auf die in einem Sensor-Steuersignal enthaltene Steuerinformation ist nur möglich, wenn die im empfangenen Sensor-Steuersignal enthaltene Adressinformation mit der Adressinformation identisch ist, welche dem Sensor zugeordnet ist. Auf dieser Basis ist die Recheneinheit in der Lage, einen bestimmten Sensor gezielt anzusteuern und zu einer vorbestimmten Reaktion zu veranlassen (unter Verwendung der im Sensor-Steuersignal enthaltenen Adressinformation).

Eine andere Weiterbildung der vorstehend genannten Variante ist derart eingerichtet, dass die Busankopplungseinrichtung eines Sensors mit dem Speicher des Sensors in Verbindung steht und der Speicher des Sensors in Abhängigkeit von dem empfangenen Sensor-Steuersignal steuerbar ist. Auf dieser Basis ist die Recheneinheit in der Lage, den Speicher eines bestimmten Sensors gezielt anzusteuern und zu einer vorbestimmten Reaktion zu veranlassen (unter Verwendung der im Sensor-Steuersignal enthaltenen Adressinformation). Der Speicher des jeweiligen Sensors kann zu unterschiedlichen Reaktionen veranlassbar sein (abhängig von der in einem Sensor-Steuersignal enthaltenen Steuerinformation). Beispielsweise kann der Speicher des jeweiligen Sensors gesteuert werden, bestimmte über die busartige Datenübertragungseinrichtung übermittelte Daten zu speichern (was im Folgenden noch bespielhaft beschrieben wird). Alternativ kann der Speicher des jeweiligen Sensors gesteuert werden, im Speicher gespeicherte Informationen oder Daten (beispielsweise eine gespeicherte Sensor-Zustandsinformation) für die Speicher-Zugriffsmittel über die busartige Datenübertragungseinrichtung zugänglich zu machen.

Vorzugsweise ist der Speicher des Sensors in Abhängigkeit von dem empfangenen Sensor-Steuersignal steuerbar, ein Signal bereitzustellen, welches eine Codierung der im Speicher des Sensors gespeicherten Sensor-Zustandsinformation enthält. Vorzugsweise sind ausserdem die Speicher-Zugriffmittel der Recheneinheit ausgebildet, das vom Speicher bereitgestellte Signal über die busartige Datenübertragungseinrichtung zu detektieren und aus der im Signal enthaltenen Codierung die Sensor-Zustandsinformation zu ermitteln.

Eine andere Weiterbildung der vorstehend genannten Variante ist derart ausgebildet, dass mindestens ein Sensor konfigurierbar ist, um einen Betrieb des Sensors in unterschiedlichen Konfigurationen in Abhängigkeit von vorgebbaren Konfigurationsdaten zu ermöglichen. Dabei ist eine erste Konfigurierung des mindestens einen Sensors nach einer ersten Inbetriebnahme des Sensors von der Recheneinheit mittels eines über die busartige Datenübertragungseinrichtung übermittelten Sensor-Steuersignals veranlassbar, dessen Steuerinformation diejenigen Konfigurationsdaten enthält, welche für die erste Konfigurierung vorgesehen sind. Die im Sensor-Steuersignal enthaltenen Konfigurationsdaten sind im Speicher des mindestens einen Sensors speicherbar.

Vorzugsweise sind die vorgebbaren Konfigurationsdaten und/oder die für die erste Konfigurierung vorgesehenen Konfigurationsdaten in einem (vorzugsweise nichtflüchtigen) Datenspeicher der Recheneinheit gespeichert.

Eine andere Ausführungsform der Vorrichtung zur Automation eines Hauses ist derart ausgebildet, dass mindestens ein an mindestens einen Aktor übermitteltes Aktor-Steuersignal eine Steuerinformation zur Steuerung des mindestens einen Aktors enthält und die Recheneinheit einen Datenspeicher umfasst, in welchem die im Aktor-Steuersignal enthaltene Steuerinformation speicherbar ist.

Der Datenspeicher der Recheneinheit ist vorzugsweise ein nichtflüchtiger Datenspeicher. Bei Ausfall der Energieversorgung bleiben die in den jeweiligen Aktor-Steuersignalen enthaltenen Steuerinformationen, welche zuletzt vor dem Ausfall der Energieversorgung an die jeweiligen Aktoren übermittelt wurden, auch nach Ausfall der Energieversorgung im Datenspeicher der Recheneinheit gespeichert. Selbst nach Ausfall der Energieversorgung ist somit eine Information darüber vorhanden, wie die einzelnen haustechnischen Einrichtungen von den jeweiligen Aktoren zuletzt vor Ausfall der Energieversorgung angesteuert wurden. Dies macht die Vorrichtung zur Automation eines Hauses relativ unempfindlich gegenüber Störungen aufgrund eines Ausfalls der Energieversorgung.

### Kurze Beschreibung der Zeichnungen

Weitere Einzelheiten der Erfindung und insbesondere beispielhafte Ausführungsformen der erfindungsgemässen Vorrichtung werden im Folgenden anhand der beigefügten Zeichnungen erläutert. Es zeigen:
- Fig. 1: eine erste, nicht der Erfindung entsprechende Ausführungsform einer Vorrichtung zur Automation eines Hauses, mit mehreren Sensoren, mehreren Aktoren und einer Recheneinheit im Kombination mit einer busartigen Datenübertragungseinrichtung;
- Fig. 2: eine zweite Ausführungsform einer Vorrichtung zur Automation eines Hauses gemäss der Erfindung;
- Fig. 3: eine detaillierte Darstellung eines Sensors, eines Aktors und der Recheneinheit der ersten Ausführungsform gemäss Fig. 1;
- Fig. 4: eine detaillierte Darstellung eines Sensors, eines Aktors und der Recheneinheit der zweiten Ausführungsform gemäss Fig. 2.

### Beschreibung von Ausführungsformen

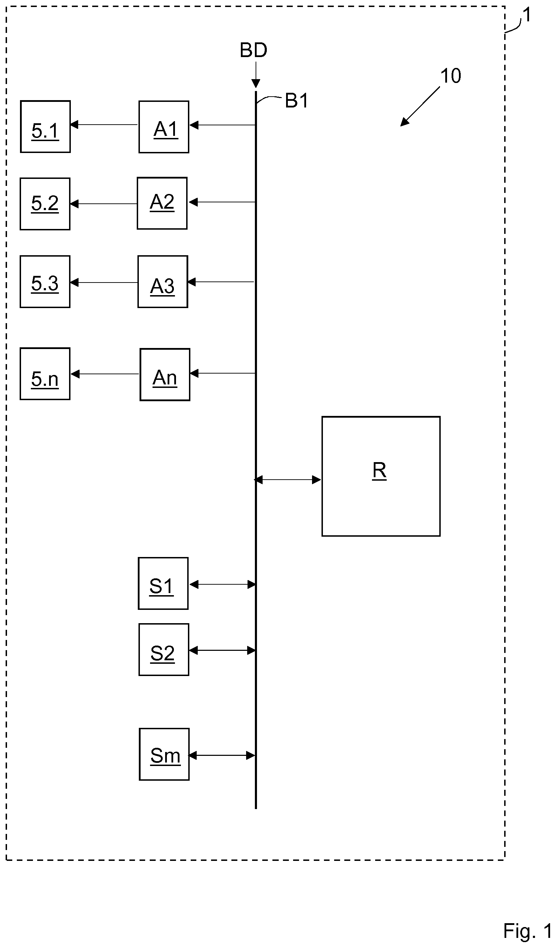

Fig. 1 zeigt eine Vorrichtung 10 zur Automation eines Hauses in einer ersten, nicht der Erfindung entsprechenden Ausführungsform. Das Haus 1 ist in der Fig. 1 mittels einer ein Rechteck darstellenden gestrichelten Linie lediglich schematisch angedeutet (die Anordnung des Rechtecks gemäss Fig. 1 ist nicht als Hinweis zu verstehen, wie die Vorrichtung 10 räumlich relativ zu einem Haus angeordnet sein sollte).

Wie Fig. 1 andeutet, ist die Vorrichtung 10 im vorliegenden Beispiel eingerichtet, n verschiedene haustechnischen Einrichtungen ("n" ist hier eine beliebige natürliche Zahl) in einem Haus oder in der Umgebung eines Hauses automatisch zu betreiben. In Fig. 1 sind (ohne Beschränkung der Allgemeinheit) insgesamt vier der haustechnischen Einrichtungen angedeutet, welche mit 5.1, 5.2, 5.3 und 5.n bezeichnet sind, wobei n≥4 angenommen ist. Welche konkrete technischen Funktionen die dargestellten Einrichtungen 5.1, 5.2, 5.3 und 5.n haben, ist in diesem Zusammenhang nicht relevant. Bei der Einrichtung 5.1 kann es sich beispielsweise um eine Beleuchtungseinrichtung mit mehreren Lichtquellen zur Beleuchtung von mehreren Räumen oder Raumbereichen handeln. Die Einrichtung 5.2 kann beispielsweise eine Anordnung von mehreren Jalousien für eine Mehrzahl von Fenstern und/oder Türen sein. Die Einrichtung 5.3 kann beispielsweise eine Heizeinrichtung mit Wärmequellen zum Heizen von mehreren Räumen in einem Haus darstellen. Die Einrichtung 5.n kann beispielsweise eine Vorrichtung zum Überwachen von Räumlichkeiten in einem Haus repräsentieren.

Die Vorrichtung 10 umfasst: mehrere Aktoren, von denen in Fig. 1 vier Aktoren A1, A2, A3 und An dargestellt sind; insgesamt m Sensoren, von denen in Fig. 1 drei Sensoren S1, S2, Sm dargestellt sind, wobei m eine beliebige natürliche Zahl mit m≥3 bezeichnet; eine Recheneinheit R; eine busartige Datenübertragungseinrichtung BD, über welche die Recheneinheit R mit allen Aktoren A1 - An und allen Sensoren S1 - Sm verbunden ist.

Im vorliegenden Beispiel ist jeder der haustechnischen Einrichtungen einer der Aktoren zugeordnet, sodass jeder der Aktoren dafür vorgesehen ist, eine der haustechnischen Einrichtungen anzusteuern. Gemäss Fig. 1 sind die Aktoren A1, A2, A3 und An beispielsweise dafür vorgesehen, die Einrichtungen 5.1, 5.2, 5.3 und 5.n (in dieser Reihenfolge) anzusteuern.

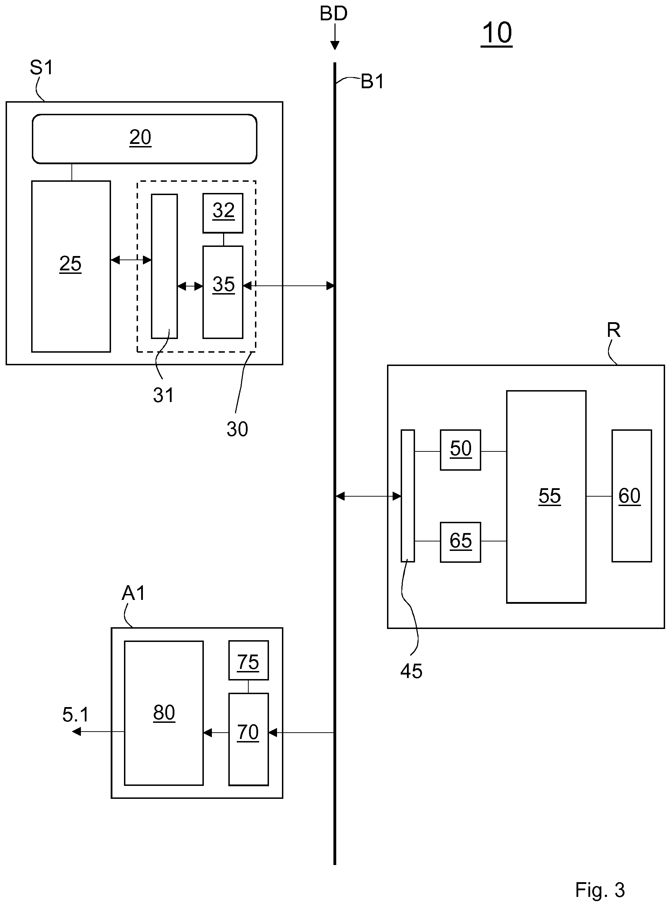

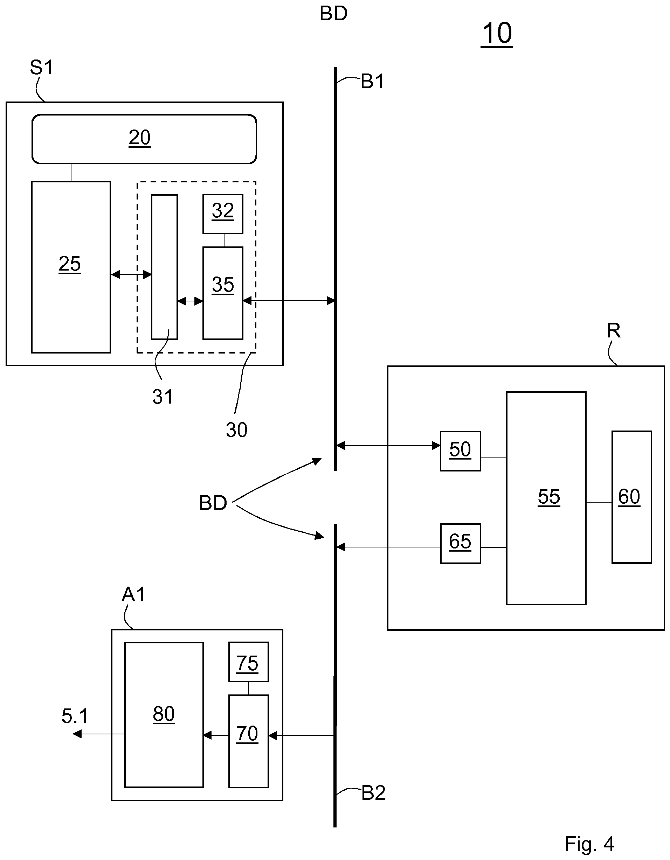

Im vorliegenden Beispiel ist angenommen, dass jeder der Sensoren S1 - Sm in verschiedene Zustände bringbar ist und eine (in Fig. 1 nicht dargestellte und im Folgenden im Zusammenhang mit Fig. 3 und 4 beschriebene) Messeinrichtung zum Registrieren eines momentanen Zustands des jeweiligen Sensors aufweist.

Welche konkrete technische Funktionen die in Fig. 1 dargestellten Sensoren S1, S2, Sm haben, ist in diesem Zusammenhang nicht relevant. Der Sensor S1 kann beispielsweise ein bedienbarer Schalter sein, welcher in verschiedene Zustände bringbar ist, um mehrere Lichtquellen einer Beleuchtungseinrichtung (z.B. Einrichtung 5.1) unabhängig voneinander an- oder auszuschalten bzw. hinsichtlich der Helligkeit des mittels der Lichtquellen erzeugten Lichts zu regeln. Entsprechend kann der Sensor S2 eine bedienbare Vorrichtung sein, welche in verschiedene Zustände bringbar ist, um für eine Anordnung von Jalousien (z.B. Einrichtung 5.2) bestimmte Soll-Positionen zu definieren, welche die einzelnen Jalousien annehmen sollen. Entsprechend kann der Sensor Sm eine bedienbare Vorrichtung sein, welche in verschiedene Zustände bringbar ist, um für eine Heizeinrichtung mit Wärmequellen zum Heizen von mehreren Räumen (z.B. Einrichtung 5.3) verschiedene Solltemperaturen zu definieren, welche in den einzelnen Räumen erreicht werden soll.

Die busartige Datenübertragungseinrichtung BD umfasst im vorliegenden Beispiel einen Bus B1, welcher eine leitungsgebundene Übertragung von Daten bzw. eine leitungsgebundene Übermittlung von Signalen ermöglicht. Im vorliegenden Beispiel sind die Recheneinheit R, alle Sensoren S1 - Sm und alle Aktoren mit dem Bus B1 verbunden, sodass die Recheneinheit R, alle Sensoren S1 - Sm und alle Aktoren an einer Übertragung von Daten oder Signalen über denselben Bus B1 beteiligt sein können.

Sowohl die Sensoren S1 - Sm als auch die Aktoren A1 - An können von der Recheneinheit R gesteuert werden, und zwar mittels Steuersignalen, welche von Recheneinheit R erzeugbar und über die busartige Datenübertragungseinrichtung BD zu den Sensoren S1 - Sm bzw. zu den Aktoren A1 - An übermittelbar sind. Letztes wird nachfolgend noch detaillierter erläutert.

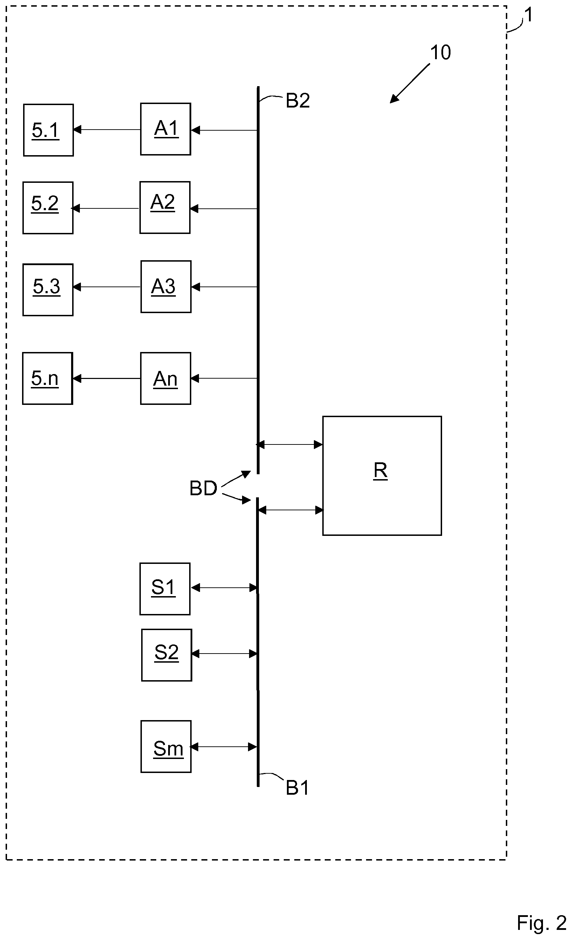

Fig. 2 zeigt eine Vorrichtung 10 zur Automation eines Hauses 1 in einer zweiten, der Erfindung entsprechenden Ausführungsform. In Fig. 1 und Fig. 2 sind gleiche bzw. gleichwirkende Einzelheiten der jeweiligen Vorrichtung 10 jeweils mit denselben Bezugszeichen bezeichnet. Dementsprechend soll im Folgenden nur auf die wesentlichen Unterschiede zwischen den Ausführungsformen gemäss Fig. 1 und 2 hingewiesen werden.

Die zweite Ausführungsform der Vorrichtung 10 gemäss Fig. 2 unterscheidet sich von der ersten Ausführungsform gemäss Fig. 1 dadurch, dass im Falle der Vorrichtung 10 gemäss Fig. 2 die busartige Datenübertragungseinrichtung BD einen ersten Bus B1 und einen vom ersten Bus B1 separaten zweiten Bus B2 umfasst, wobei die Recheneinheit R mit jedem einzelnen Sensor S1 - Sm über den ersten Bus B1 verbunden ist und die Recheneinheit R mit jedem einzelnen Aktor A1 - An über den zweiten Bus B2 verbunden ist. Im vorliegenden Beispiel gemäss Fig. 2 ermöglicht der erste Bus B1 eine leitungsgebundene Übertragung von Daten bzw. eine leitungsgebundene Übermittlung von Signalen zwischen der Recheneinheit R und allen Sensoren S1 - Sm, aber keine Übertragung von Daten bzw. Signalen zwischen der Recheneinheit R und den einzelnen Aktor A1 - An. Andererseits ermöglicht der zweite Bus B2 eine leitungsgebundene Übertragung von Daten bzw. eine leitungsgebundene Übermittlung von Signalen zwischen der Recheneinheit R und allen Aktoren A1 - An, aber keine Übertragung von Daten bzw. Signalen zwischen der Recheneinheit R und den einzelnen Sensoren S1 - Sm.

Im Folgenden werden Einzelheiten der ersten Ausführungsform der Vorrichtung 10 gemäss Fig. 1 und der zweiten Ausführungsform der Vorrichtung 10 gemäss Fig. 2 erläutert anhand der Fig. 3 und 4.

Die Fig. 3 und 4 stellen insbesondere Einzelheiten (hinsichtlich der Struktur und der Funktion) der Recheneinheit R, der Sensoren S1 - Sm und der Aktoren A1 - An dar. Im vorliegenden Fall kann davon ausgegangen werden, dass die Sensoren S1 - Sm im Hinblick auf die Funktionsweise der Vorrichtung 10 strukturell und funktionell jeweils im Wesentlichen analog ausgebildet sind. Weiterhin kann davon ausgegangen werden, dass die Aktoren A1 - An im Hinblick auf die Funktionsweise der Vorrichtung 10 strukturell und funktionell jeweils im Wesentlichen analog ausgebildet sind.

Dementsprechend sind in Fig. 3 und 4 nicht alle Sensoren S1 - Sm dargestellt, sondern exemplarisch nur der Sensor S1, wobei im Wesentlichen Einzelheiten des Sensors S1 gezeigt sind, welche die übrigen Sensoren in analoger Form ebenfalls aufweisen. Weiterhin sind in Fig. 3 und 4 nicht alle Aktoren A1 - An dargestellt, sondern exemplarisch nur der Aktor A1, wobei im Wesentlichen Einzelheiten des Aktors A1 gezeigt sind, welche die übrigen Aktoren in analoger Form ebenfalls aufweisen.

Wie aus Fig. 3 und 4 ersichtlich, weist der Sensor S1 zumindest ein Sensorelement 20 auf, welches in unterschiedliche Zustände bringbar ist (diese unterschiedlichen Zustände des Sensorelements 20 werden in diesem Zusammenhang als "unterschiedliche Zustände des Sensors S1" betrachtet). Das Sensorelement 20 kann beispielsweise eine Taste sein, welche manuell auf unterschiedliche Weisen betätigt werden kann, um unterschiedliche Zustände zu definieren.

Der Sensor S1 (wie die übrigen Sensoren) umfasst weiterhin eine Messeinrichtung 25, welche ausgebildet ist, einen momentanen Zustand des Sensorelements 20 (d.h. den Zustand, in den das Sensorelement 20 an einem bestimmten Zeitpunkt gebracht ist) zu erfassen. Die Messeinrichtung 25 kann den momentanen Zustand des Sensors S1 beispielsweise kontinuierlich oder quasi-kontinuierlich an mehreren aufeinanderfolgenden Zeitpunkten registrieren.

Der Sensor S1 weist (wie die übrigen Sensoren) weiterhin einen Speicher 30 auf, welcher zum Speichern von Daten vorgesehen ist. Der Speicher 30 weist zu diesem Zweck insbesondere ein Speicherelement 31 auf, in welchem die jeweiligen Daten speicherbar sind.

Das Speicherelement 31 dient im Betrieb des Sensors S1 insbesondere dazu, eine Information über den momentanen Zustand des Sensors S1 bzw. des Sensorelements 20 zu speichern. Der Sensor S1 ist (wie die übrigen Sensoren) zu diesem Zweck derart konzipiert, dass im Betrieb des Sensors S1 nach jeder Registrierung eines momentanen Zustand des Sensorelements 20 mittels der Messeinrichtung 25 im Speicherelement 31 eine Sensor-Zustandsinformation gespeichert wird, welche dem von der Messeinrichtung 25 registrierten momentanen Zustand des Sensorelements 20 entspricht. Die Messeinrichtung 25 kann den momentanen Zustand des Sensors S1 vorzugsweise kontinuierlich oder quasi-kontinuierlich an mehreren aufeinanderfolgenden Zeitpunkten registrieren. Dadurch wird die im Speicherelement 31 gespeicherte Sensor-Zustandsinformation ständig aktualisiert, sodass gewährleistet ist, dass im Speicherelement 31 stets eine aktuelle Information über den momentanen Zustand des Sensorelements 20 bzw. des Sensors S1 enthalten ist.

Jeder der Sensoren S1 - Sm und insbesondere der Speicher 30 jedes der Sensoren S1 - Sm ist von der Recheneinheit R steuerbar, und zwar mittels Sensor-Steuersignalen, welche von Recheneinheit R erzeugbar und über die busartige Datenübertragungseinrichtung BD zu den Sensoren S1 - Sm übermittelbar sind. Zu diesem Zweck weist der Speicher 30 jedes der Sensoren S1 - Sm eine Busankopplungseinrichtung 35 auf, welche ausgebildet ist, ein mittels der busartigen Datenübertragungseinrichtung BD übertragenes Sensor-Steuersignal zu empfangen und gegebenenfalls eine Steuerung des jeweiligen Sensors oder des Speichers 30 des jeweiligen Sensors zu veranlassen.

Um eine selektive Ansteuerung eines bestimmten Sensors zu ermöglichen, ist jedem der Sensoren S1 - Sm eine Adressinformation zugeordnet, welche jeden Sensor eindeutig identifiziert. Weiterhin umfasst jeder der Sensoren S1 - Sm ein Adressinformation-Speicherelement 32, welches die dem Sensor zugeordnete Adressinformation enthält (Fig. 3 und 4). Die Adressinformation-Speicherelemente 32 der einzelnen Sensoren können beispielsweise als konventionelle Adressschalter ausbildet sein, welche manuell verstellbar sind, um eine gewünschte Adressinformation festzulegen. Bekannte Ausführungsformen derartiger Adressschalter sind beispielsweise Drehschalter oder DIP-Schalter. Alternativ kann das Adressinformation-Speicherelement 32 als nichtflüchtiger Datenspeicher ausgebildet sein, wobei in diesem Datenspeicher diejenige Adressinformation gespeichert wird, welche dem jeweiligen Sensor zugeordnet ist.

Um eine selektive Ansteuerung eines bestimmten Sensors zu ermöglichen, ist jeder der Sensoren S1 - Sm von der Recheneinheit R mittels eines über die busartige Datenübertragungseinrichtung BD übermittelten Sensor-Steuersignals steuerbar, welches die dem jeweiligen Sensor zugeordnete Adressinformation und eine Steuerinformation zum Steuern des Sensors enthält.

Weiterhin ist die Busankopplungseinrichtung 35 jedes der Sensoren S1 - Sm ausgebildet, eine Steuerung des jeweiligen Sensors nur dann zu veranlassen, wenn die im empfangenen Sensor-Steuersignal enthaltene Adressinformation mit der Adressinformation identisch ist, welche dem jeweiligen Sensor zugeordnet ist, wobei die Busankopplungseinrichtung 35 ausgebildet ist, die Steuerung des Sensors entsprechend der im empfangenen Sensor-Steuersignal enthaltenen Steuerinformation zu veranlassen. Die im Sensor-Steuersignal enthaltene Steuerinformation definiert somit, welche Reaktion des jeweiligen Sensors als Ergebnis einer Ansteuerung des Sensors mit dem Sensor Sensor-Steuersignal veranlasst werden soll. Wie Fig. 3 und 4 weiterhin andeuten, steht die Busankopplungseinrichtung 35 jedes der Sensoren S1 - Sm mit dem Speicher 30 bzw. dem Speicherelement 31 des jeweiligen Sensors in Verbindung, sodass der Speicher 30 bzw. das Speicherelement 31 des jeweiligen Sensors in Abhängigkeit von dem empfangenen Sensor-Steuersignal steuerbar ist.

Jeder der Aktoren A1 - An ist von der Recheneinheit R steuerbar, und zwar mittels Aktor-Steuersignalen, welche von Recheneinheit R erzeugbar und über die busartige Datenübertragungseinrichtung BD zu den Aktoren A1 - An übermittelbar sind. Zu diesem Zweck weist jeder der Aktoren A1 - An eine Busankopplungseinrichtung 70 auf, welche ausgebildet ist, ein mittels der busartigen Datenübertragungseinrichtung BD übertragenes Aktor-Steuersignal zu empfangen und gegebenenfalls eine Steuerung des jeweiligen Aktors zu veranlassen.

Um eine selektive Ansteuerung eines bestimmten Aktors zu ermöglichen, ist jedem der Aktoren A1 - An eine Adressinformation zugeordnet, welche jeden Aktor eindeutig identifiziert. Weiterhin umfasst jeder der Aktoren A1 - An ein Adressinformation-Speicherelement 75, welches die dem Aktor zugeordnete Adressinformation enthält (Fig. 3 und 4). Die Adressinformation-Speicherelemente 75 der einzelnen Aktoren können analog zu den bereits erwähnten Adressinformation-Speicherelementen 32 der Sensoren S1 - Sm ausgebildet sein.

Um eine selektive Ansteuerung eines bestimmten Aktors zu ermöglichen, ist jeder der Aktoren A1 - An von der Recheneinheit R mittels eines über die busartige Datenübertragungseinrichtung BD übermittelten Aktor-Steuersignals steuerbar, welches die dem jeweiligen Aktor zugeordnete Adressinformation und eine Steuerinformation zum Steuern des Aktors enthält.

Weiterhin ist die Busankopplungseinrichtung 70 jedes der Aktoren A1 - An ausgebildet, eine Steuerung des jeweiligen Aktors nur dann zu veranlassen, wenn die im empfangenen Aktor-Steuersignal enthaltene Adressinformation mit der Adressinformation identisch ist, welche dem jeweiligen Aktor zugeordnet ist, wobei die Busankopplungseinrichtung 70 ausgebildet ist, die Steuerung des Aktors entsprechend der im empfangenen Aktor-Steuersignal enthaltenen Steuerinformation zu veranlassen. Die im Aktor-Steuersignal enthaltene Steuerinformation definiert somit, welche Reaktion des jeweiligen Aktors als Ergebnis einer Ansteuerung des Aktors mit dem Aktor-Steuersignal veranlasst werden soll. Wie Fig. 3 und 4 weiterhin andeuten, steht die Busankopplungseinrichtung 70 jedes der Aktoren A1 - An mit einer Steuereinrichtung 80 zum Ansteuern der dem jeweiligen Aktor zugeordneten haustechnischen Einrichtung in Verbindung, sodass die Steuereinrichtung 80 des jeweiligen Aktors in Abhängigkeit von dem empfangenen Aktor-Steuersignal steuerbar ist.

Wie Fig. 3 andeutet, umfasst die Recheneinheit R der ersten Ausführungsform der Vorrichtung 10 folgende funktionelle Komponenten:
- Speicher-Zugriffsmittel 50, welche einen Zugriff auf die Speicher 30 der Sensoren S1 - Sm ermöglichen und ausgebildet sind, Sensor-Steuersignale zum Ansteuern der Sensoren S1 - Sm zu erzeugen;
- eine Auswerteeinrichtung 50;
- einen Datenspeicher 60;
- eine Steuereinrichtung 65, welche ausgebildet ist, Aktor-Steuersignale zum Ansteuern der Aktoren A1 - Am zu erzeugen;
- eine Busankopplungseinrichtung 45.

Im Falle der in Fig. 3 dargestellten Ausführungsform der Recheneinheit R hat die Busankopplungseinrichtung 45 die Funktion, die Übermittlung der mittels der Speicher-Zugriffsmittel 50 erzeugten Sensor-Steuersignale über die busartige Datenübertragungseinrichtung BD und die Übermittlung der mittels der Steuereinrichtung 65 erzeugten Aktor-Steuersignale über die busartige Datenübertragungseinrichtung BD miteinander zeitlich zu koordinieren, um zu erreichen, dass Sensor-Steuersignale und Aktor-Steuersignale nicht gleichzeitig übermittelt werden. Da die Datenübertragungseinrichtung BD in der vorliegenden Ausführungsform nur einen Bus B1 umfasst, können so Konflikte hinsichtlich der Übermittlung der Sensor-Steuersignale und der Übermittlung der Sensor-Steuersignale über denselben Bus B1 vermieden werden.

Um ein Ansteuern eines der Sensoren S1-Sm zu ermöglichen, sind die Speicher-Zugriffsmittel 50 ausgebildet, ein Sensor-Steuersignal zu erzeugen, welches: (i) mittels der busartigen Datenübertragungseinrichtung BD zu jedem der Sensoren S1 - Sm übermittelt wird; (ii) welches die Adressinformation enthält, die dem anzusteuernden Sensor zugeordnet ist; (iii) welches zusätzlich eine Steuerinformation enthält. Dabei definiert die im Sensor-Steuersignal enthaltene Steuerinformation, welchen Effekt die Ansteuerung auf den Sensor haben soll.

Die Speicher-Zugriffsmittel 50 sind insbesondere ausgebildet, Zugriffe auf jeden Speicher 30 der einzelnen Sensoren S1 - Sm über die busartige Datenübertragungseinrichtung BD durchzuführen, sodass die Sensor-Zustandsinformationen, welche in den Speicherelementen 31 der Sensoren S1 - Sm gespeichert sind, von der Recheneinheit R erfassbar ist. Um einen Zugriff auf den Speicher 30 eines der Sensoren S1-Sm durchzuführen, übermitteln die Speicher-Zugriffsmittel 50 über die busartige Datenübertragungseinrichtung BD ein entsprechendes Sensor-Steuersignal, welches die Adressinformation desjenigen Sensors enthält, auf dessen Speicher 30 der Zugriff erfolgen soll.

Mit diesem Sensor-Steuersignal ist - wie oben erläutert - ausschliesslich derjenige Sensor entsprechend der im Sensor-Steuersignal enthaltenen Steuerinformation ansteuerbar, welchem dieselbe Adressinformation zugeordnet ist, die im Sensor-Steuersignal enthalten ist. Im vorliegenden Fall hat die Ansteuerung desjenigen Sensors, auf dessen Speicher 30 ein Zugriff erfolgen soll, den Effekt, dass der Speicher 30 angesteuert wird, ein Signal (vorzugsweise ein elektrisches Signal) bereitzustellen, welches eine Codierung der im Speicherelement 31 des Sensors gespeicherten Sensor-Zustandsinformation enthält. Weiterhin sind die Speicher-Zugriffmittel 50 der Recheneinheit R ausgebildet, das vom Speicher 30 bereitgestellte Signal über die busartige Datenübertragungseinrichtung BD zu detektieren (mittels einer in den Figuren nicht dargestellten Messeinrichtung) und aus der im Signal enthaltenen Codierung die Sensor-Zustandsinformation zu ermitteln.

Im Betrieb der Vorrichtung 10 ist vorgesehen, dass mindestens ein Aktor, z.B. der Aktor A1, in Abhängigkeit von dem momentanen Zustand mindestens eines Sensors, z.B. des Sensors S1, steuerbar sein soll. Für diesen Zweck ist die Vorrichtung 10 wie folgt eingerichtet.

Zunächst steuert die Recheneinheit R die Speicher-Zugriffsmittel 50, einen Zugriff auf den Speicher 30 des Sensors S1 über die busartige Datenübertragungseinrichtung BD durchzuführen, sodass eine im Speicher 30 des Sensors S1 gespeicherte Sensor-Zustandsinformation von der Recheneinheit R erfasst wird.

Weiterhin ist die Auswerteeinrichtung 55 der Recheneinheit R ausgebildet, eine Auswertung einer von der Recheneinheit R erfassten Sensor-Zustandsinformation durchzuführen und als Ergebnis der Auswertung nach vorgegebenen Regeln zu ermitteln, ob der Aktor A1 zum Ansteuern der haustechnischen Einrichtung 5.1 aktiviert werden soll, und, falls das Ergebnis der Auswertung ist, dass der Aktor A1 zum Ansteuern der haustechnischen Einrichtung 5.1 aktiviert werden soll, die Steuereinrichtung 65 zu veranlassen, ein entsprechendes Aktor-Steuersignal über die busartige Datenübertragungseinrichtung BD an den Aktor A1 zu übermitteln.

Ausserdem können die Speicher-Zugriffsmittel 50 gesteuert werden, den Zugriff auf den Speicher 30 des Sensors S1 wiederholt an mehreren aufeinanderfolgenden Zeitpunkten (beispielsweise wiederholt mit zeitlichen Abständen von 0.1 Sekunden) durchzuführen, sodass die Recheneinheit R nach jedem Zugriff der Speicher-Zugriffsmittel 50 die jeweils im Speicher 30 des Sensors S1 gespeicherte Sensor-Zustandsinformation erfassen kann. Weiterhin ist die Auswerteeinrichtung 55 ausgebildet, nach jedem Zugriff der Speicher-Zugriffsmittel 50 eine Auswertung der jeweils von der Recheneinheit R erfassten Sensor-Zustandsinformation durchzuführen und als Ergebnis der Auswertung nach vorgegebenen Regeln zu ermitteln, ob der Aktor A1 zum Ansteuern der haustechnischen Einrichtung 5.1 aktiviert werden soll, und, falls das Ergebnis der Auswertung ist, dass der Aktor A1 zum Ansteuern der der haustechnischen Einrichtung 5.1 aktiviert werden soll, die Steuereinrichtung 65 zu veranlassen, ein entsprechendes Aktor-Steuersignal über die busartige Datenübertragungseinrichtung BD an den mindestens einen Aktor A1 zu übermitteln.

Ausserdem können die Speicher-Zugriffsmittel 50 gesteuert werden, Zugriffe auf die Speicher 30 aller Sensoren S1-Sm zeitlich nacheinander wiederholt durchzuführen und demensprechend für jeden der Sensoren S1-Sm die im Speicher 30 des jeweiligen Sensors gespeicherte Sensorzustandsinformation nach jedem Zugriff auf den Speicher 30 des jeweiligen Sensors zu erfassen.

Die Vorrichtung 10 kann weiterhin derart konzipiert sein, dass jedem der Sensoren S1 - Sm mindestens einer der Aktoren A1-An zugeordnet ist und die Recheneinheit R eine Implementierung einer Sensor-Aktor-Zuordnung umfasst, welche für jeden der Sensoren S1 - Sm eine Information darüber enthält, welcher der Aktoren A1 - An dem Sensor zugeordnet ist. Diese Implementierung kann beispielsweise dadurch realisiert sein, dass die der Sensor-Aktor-Zuordnung entsprechenden Informationen im Datenspeicher 60 der Recheneinheit R gespeichert werden. Dadurch steht der Recheneinheit R jederzeit eine Information darüber zu Verfügung, welcher der Aktoren A1 - An einem bestimmten Sensor zugeordnet ist. In diesem Fall ist vorgesehen, jeden Aktor, der einem bestimmten Sensor gemäss der Implementierung der Sensor-Aktor-Zuordnung zugeordnet ist, in Abhängigkeit von dem momentanen Zustand des bestimmten Sensors zu steuern.

Zu diesem Zweck ist die Auswerteeinrichtung 55 ausgebildet, für jeden einzelnen der Sensoren S1 - Sm jeweils nach einem Zugriff auf den Speicher 30 des jeweiligen Sensors bzw. jeweils nach einem Erfassen einer im Speicher 30 des jeweiligen Sensors gespeicherten Sensor-Zustandsinformation eine Auswertung der jeweils erfassten Sensor-Zustandsinformation durchzuführen und als Ergebnis der Auswertung nach vorgegebenen Regeln zu ermitteln, ob ein Aktor, welcher dem jeweiligen Sensor gemäss der Sensor-Aktor-Zuordnung zugeordnet ist, zum Ansteuern mindestens einer haustechnischen Einrichtung aktiviert werden soll, und, falls das Ergebnis der Auswertung ist, dass ein Aktor, welcher dem jeweiligen Sensor gemäss der Sensor-Aktor-Zuordnung zugeordnet ist, zum Ansteuern der mindestens einen haustechnischen Einrichtung aktiviert werden soll, die Steuereinrichtung 65 zu veranlassen, ein entsprechendes Aktor-Steuersignal über die busartige Datenübertragungseinrichtung BD an den Aktor, welcher dem jeweiligen Sensor gemäss der Sensor-Aktor-Zuordnung zugeordnet ist, zu übermitteln. Falls einem der Sensoren mehrere Aktoren zugeordnet sind, können die vorstehend genannten Massnahmen selbstverständlich analog für jeden der Aktoren durchgeführt werden, welche dem Sensor zugeordnet sind, d.h. die Steuereinrichtung 65 kann gegebenenfalls veranlasst werden, an die jeweiligen Aktoren, welche dem einen der Sensoren zugeordnet sind, ein entsprechendes Aktor-Steuersignal zu übermitteln.

Im Datenspeicher 60 der Recheneinheit R können verschiedene Daten gespeichert sein, welche dazu dienen, eine spezifische Konfiguration der Vorrichtung 10 zu definieren, welche den Betrieb der Vorrichtung 10 nach einer ersten Inbetriebnahme der Vorrichtung 10 bestimmt. Zu diesen Daten gehören insbesondere:
- die Adressinformationen, welche den einzelnen Sensoren zugeordnet sind;
- die Adressinformationen, welche den einzelnen Aktoren zugeordnet sind;
- Informationen über die Sensor-Aktor-Zuordnung;
- eine Spezifikation der vorgegebenen Regeln, nach welchen die Auswerteeinrichtung 55 die jeweils erfassten Sensor-Zustandsinformationen vornimmt und ermittelt, ob ein bestimmter Aktor aktiviert werden soll.

Weiterhin kann vorgesehen sein, dass einer oder mehrere Sensoren konfigurierbar sind, um einen Betrieb des jeweiligen Sensors in unterschiedlichen Konfigurationen in Abhängigkeit von vorgebbaren Konfigurationsdaten zu ermöglichen. Die jeweils vorgebbaren Konfigurationsdaten definieren hierbei einen spezifischen Betriebsmodus des jeweiligen Sensors, ausgewählt aus einer Mehrzahl von mehreren möglichen Betriebsmodi, in welchem der jeweilige Sensor während eines Betriebs der Vorrichtung 10 betrieben werden könnte.

Die Vorrichtung 10 ist so konzipiert, dass sie nach einer ersten Inbetriebnahme eines Sensors automatisch erkennen kann, ob der Sensor konfigurierbar ist und nach Inbetriebnahme des Sensors noch konfiguriert werden muss. Diesbezüglich kann der Speicher 30 eines Sensors, welcher konfigurierbar ist, so konzipiert sein, dass dieser Speicher bei seiner Inbetriebnahme charakteristische Daten enthält, welche anzeigen, dass der Sensor konfigurierbar ist und nach Inbetriebnahme des Sensors noch konfiguriert werden muss. Dadurch, dass die Recheneinheit R eingerichtet ist, einen Zugriff auf den Speicher des Sensors durchzuführen, kann die Recheneinheit bei einem ersten Zugriff auf den Speicher 30 des Sensors die im Speicher 30 enthaltenen Daten erfassen und somit anhand der erfassten Daten erkennen, ob der Sensor konfigurierbar ist und nach Inbetriebnahme des Sensors noch konfiguriert werden muss. Weiterhin ist die Recheneinheit R eingerichtet, eine erste Konfigurierung eines Sensors nach einer ersten Inbetriebnahme des Sensors mittels eines über die busartige Datenübertragungseinrichtung BD übermittelten Sensor-Steuersignals zu veranlassen, dessen Steuerinformation die spezifischen Konfigurationsdaten enthält, welche für die erste Konfigurierung des Sensors vorgesehen sind. Zweckmässigerweise sind die im Sensor-Steuersignal enthaltenen Konfigurationsdaten im Speicher 30 des zu konfigurierenden Sensors speicherbar.

Zweckmässigerweise können alle spezifischen Konfigurationsdaten, welche zur Konfigurierung der Sensoren vorgesehen sind, im Datenspeicher 60 der Recheneinheit R gespeichert sein.

Zweckmässigerweise dient der Datenspeicher 60 der Recheneinheit R dazu, eine Reihe von Daten zu speichern, welche während des Betriebs der Vorrichtung 10 anfallen. Hierzu gehören: die Sensor-Zustandsdaten, welche von der Recheneinheit R während des Betriebs erfasst werden; die Steuerinformationen, welche in den an die Aktoren übermittelten Aktor-Steuersignalen enthalten sind. Dementsprechend enthält der Datenspeicher 60 Informationen darüber, in welchen Zuständen sich die jeweiligen Sensoren und Aktoren während des Betriebs der Vorrichtung 10 momentan befinden.

Der Datenspeicher 60 der Recheneinheit R ist zweckmässigerweise ein nichtflüchtiger Speicher, sodass alle im Datenspeicher 60 gespeicherten Daten erhalten bleiben, selbst wenn eine Störung der Energieversorgung der Recheneinheit R oder der Vorrichtung 10 auftreten sollte.

Die Recheneinheit R der zweiten Ausführungsform der Vorrichtung 10 gemäss Fig. 4 unterscheidet sich von der Recheneinheit R der ersten Ausführungsform der Vorrichtung 10 gemäss Fig. 3 lediglich dadurch, dass die in Fig. 3 dargestellte Busankopplungseinrichtung 45 im Falle der Recheneinheit R der zweiten Ausführungsform gemäss Fig. 4 nicht vorgesehen ist. Dies ist damit begründet, dass die busartige Datenübertragungseinrichtung BD gemäss Fig. 4 - wie bereits erwähnt - den ersten Bus B1 und den vom ersten Bus separaten zweiten Bus B2 umfasst. Im vorliegenden Fall werden die Sensor-Steuersignale, welche mittels der Speicher-Zugriffsmittel 50 erzeugbar sind, über den ersten Bus B1 zu den Sensoren S1 - Sm übermittelt, während die Aktor-Steuersignale, welche mittels der Steuereinrichtung 65 erzeugbar sind, über den zweiten Bus B2 zu den Aktoren A1 - An übermittelt werden.

In Fig. 3 und 4 sind die Auswerteeinrichtung 55 und die Steuereinrichtung 65 schematisch als separate Bestandteile der Recheneinheit R dargestellt. Die Recheneinheit R kann selbstverständlich auch so konzipiert sein, dass die oben beschriebenen Funktionen der Auswerteeinrichtung 55 und der Steuereinrichtung 65 in einer einzigen Baugruppe der Recheneinheit R implementiert sind. Die Auswerteeinrichtung 55 kann beispielsweise ein integraler Bestandteil der Steuereinrichtung 65 sein kann.

Die Recheneinheit R kann als konventioneller Server konzipiert sein, beispielsweise als LINUX-Server. Der erste Bus B1 kann beispielsweise auf Basis eines Modbus-Protokolls realisiert werden. Der zweite Bus B2 kann beispielsweise auf Basis eines DMX-Protokolls realisiert werden.

Die genannten Massnahmen erlauben eine Realisierung der Vorrichtung 10 auf Basis einer busartigen Datenübertragungseinrichtung, welche mit kostengünstiger Elektronik realisierbar ist und eine schnelle Datenübertragung ermöglicht.

## Patentansprüche

1. Vorrichtung (10) zur Automation eines Hauses (1), welche umfasst:
mindestens einen Aktor (A1, A2, A3) zum Ansteuern mindestens einer haustechnischen Einrichtung (5.1, 5.2, 5.3) ;
mindestens einen Sensor (S1, S2, Sm), welcher in verschiedene Zustände bringbar ist und eine Messeinrichtung (25) zum Registrieren eines momentanen Zustands des Sensors (S1, S2, Sm) und einen Speicher (30, 31) aufweist, wobei die verschiedenen Zustände des Sensors zumindest einen ersten Zustand und einen zweiten Zustand umfassen und der Speicher (30, 31) dazu ausgebildet ist, nach einem Registrieren eines momentanen Zustands des Sensors (S1, S2, Sm) mittels der Messeinrichtung (25) in dem Speicher (30, 31) eine Sensor-Zustandsinformation zu speichern, welche dem von der Messeinrichtung (25) registrierten momentanen Zustand des Sensors (S1, S2, Sm) entspricht;
eine Recheneinheit (R);
eine busartige Datenübertragungseinrichtung (BD), über welche die Recheneinheit (R) mit dem mindestens einen Sensor (S1, S2, Sm) und dem mindestens einen Aktor (A1, A2, A3) verbunden ist,
wobei die Recheneinheit (R) eine Steuereinrichtung (65) umfasst, welche ausgebildet ist, über die busartige Datenübertragungseinrichtung (BD) an den mindestens einen Aktor (A1, A2, A3) ein Aktor-Steuersignal zu übermitteln, mit welchem der mindestens eine Aktor (A1, A2, A3) aktivierbar ist, die mindestens eine haustechnische Einrichtung (5.1) anzusteuern;
wobei die Recheneinheit (R) Speicher-Zugriffsmittel (50) umfasst, welche ausgebildet sind, einen Zugriff auf den Speicher (30, 31) des mindestens einen Sensors (S1) über die busartige Datenübertragungseinrichtung (BD) durchzuführen, sodass eine im Speicher (30, 31) des mindestens einen Sensors (S1, S2, Sm) gespeicherte Sensor-Zustandsinformation von der Recheneinheit (R) erfassbar ist;
wobei die Steuereinrichtung (65) der Recheneinheit (R) ausgebildet ist, den mindestens einen Aktor (A1, A2, A3) in Abhängigkeit von einer von der Recheneinheit (R) erfassten Sensor-Zustandsinformation derart anzusteuern, dass die Steuereinrichtung (65) ein erstes Aktor-Steuersignal über die busartige Datenübertragungseinrichtung (BD) an den mindestens einen Aktor (A1, A2, A3) übermittelt, falls die von der Recheneinheit (R) erfasste Sensor-Zustandsinformation dem ersten Zustand des mindestens einen Sensors (S1, S2, Sm) entspricht, und entweder kein Aktor-Steuersignal oder ein vom ersten Aktor-Steuersignal verschiedenes zweites Aktor-Steuersignal über die busartige Datenübertragungseinrichtung (BD) an den mindestens einen Aktor (A1, A2, A3) übermittelt, falls die von der Recheneinheit (R) erfasste Sensor-Zustandsinformation dem zweiten Zustand des mindestens einen Sensors (S1, S2, Sm) entspricht;
wobei die Speicher-Zugriffsmittel (50) steuerbar sind, den Zugriff auf den Speicher (30, 31) des mindestens einen Sensors wiederholt an mehreren aufeinanderfolgenden Zeitpunkten durchzuführen, und
die Recheneinheit (R) ausgebildet ist, nach jedem Zugriff der Speicher-Zugriffsmittel (50) die jeweils im Speicher (30, 31) des mindestens einen Sensors (S1) gespeicherte Sensor-Zustandsinformation zu erfassen;
wobei die mindestens eine haustechnische Einrichtung und der mindestens eine Sensor gemäss einer der folgenden Alternativen (a)-(c) ausgebildet sind:
(a) die mindestens eine haustechnische Einrichtung (5.1) ist eine Beleuchtungseinrichtung und der mindestens eine Sensor (S1) ist als bedienbarer Schalter ausgebildet, welcher in verschiedene Zustände bringbar ist, um mindestens eine Lichtquelle der Beleuchtungseinrichtung an- oder auszuschalten oder hinsichtlich der Helligkeit des mittels der Lichtquelle erzeugten Lichts zu regeln;
(b) die mindestens eine haustechnische Einrichtung (5.2) ist eine Anordnung von mindestens einer Jalousie und der mindestens eine Sensor (S2) ist als bedienbare Vorrichtung ausgebildet, die in verschiedene Zustände bringbar ist, welche SollPositionen der mindestens einen Jalousie definieren;
(c) die mindestens eine haustechnische Einrichtung (5.3) ist eine Heizeinrichtung zum Heizen von mindestens einem Raum und der mindestens eine Sensor (Sm) ist als bedienbare Vorrichtung ausgebildet, die in verschiedene Zustände bringbar ist, welche mittels der Heizeinrichtung in dem mindestens einen Raum zu erreichende Solltemperaturen definieren;
**dadurch gekennzeichnet, dass**
die busartige Datenübertragungseinrichtung (BD) einen ersten Bus (B1) und einen vom ersten Bus separaten zweiten Bus (B2) umfasst,
jeder Sensor (S1, S2, Sm) mit der Recheneinheit (R) über den ersten Bus (B1) verbunden ist, sodass eine leitungsgebundene Übertragung von Daten oder Signalen zwischen der Recheneinheit (R) und dem Sensor (S1, S2, Sm) über den ersten Bus (B1) ermöglicht ist und jeder Zugriff der Speicher-Zugriffsmittel (50) auf den Speicher (30, 31) des Sensors (S1, S2, Sm) über den ersten Bus (B1) durchführbar ist, und
jeder Aktor (A1, A2, A3, An) mit der Recheneinheit (R) über den zweiten Bus (B2) verbunden ist, sodass eine leitungsgebundene Übertragung von Daten oder Signalen zwischen der Recheneinheit (R) und dem Aktor (A1, A2, A3, An) über den zweiten Bus (B2) ermöglicht ist und jedes Aktor-Steuersignal von der Steuereinrichtung (65) der Recheneinheit (R) an den Aktor (A1, A2, A3, An) über den zweiten Bus (B2) übermittelbar ist.

2. Vorrichtung (10) nach Anspruch 1, wobei
die Recheneinheit (R) eine Auswerteeinrichtung (55) umfasst, welche ausgebildet ist, eine Auswertung einer von der Recheneinheit (R) erfassten Sensor-Zustandsinformation durchzuführen und als Ergebnis der Auswertung nach vorgegebenen Regeln zu ermitteln, ob der mindestens eine Aktor (A1) zum Ansteuern der mindestens einen haustechnischen Einrichtung (5.1) aktiviert werden soll, und, falls das Ergebnis der Auswertung ist, dass der mindestens eine Aktor zum Ansteuern der mindestens einen haustechnischen Einrichtung aktiviert werden soll, die Steuereinrichtung (65) zu veranlassen, ein entsprechendes Aktor-Steuersignal über den zweiten Bus (B2) an den mindestens einen Aktor (A1) zu übermitteln.

3. Vorrichtung (10) nach Anspruch 1 oder 2, wobei
die Steuereinrichtung (65) ausgebildet ist, nach jedem Zugriff der Speicher-Zugriffsmittel (50) den mindestens einen Aktor (A1) in Abhängigkeit von der von der Recheneinheit (R) jeweils erfassten Sensor-Zustandsinformation anzusteuern.

4. Vorrichtung (10) nach einem der Ansprüche 1-3, wobei eine Mehrzahl des Sensors (S1, S2, Sm) vorhanden ist,
wobei jeder der Sensoren (S1, S2, Sm) über den ersten Bus (B1) mit der Recheneinheit verbunden ist und
wobei die Speicher-Zugriffsmittel (50) ausgebildet sind, einen Zugriff auf den Speicher (30, 31) eines jeden der Sensoren (S1, S2, Sm) über den ersten Bus (B1) durchzuführen, sodass jede Sensor-Zustandsinformation, welche in dem Speicher eines jeden der Sensoren gespeichert ist, von der Recheneinheit (R) erfassbar ist.

5. Vorrichtung (10) nach Anspruch 4, wobei
die Speicher-Zugriffsmittel (50) steuerbar sind, den Zugriff auf den Speicher (30, 31) eines jeden der Sensoren (S1, S2, Sm) wiederholt an mehreren aufeinanderfolgenden Zeitpunkten durchzuführen, und
jede Sensor-Zustandsinformation, welche im Speicher (30, 31) eines jeden der Sensoren (S1, S2, Sm) jeweils gespeichert ist, von der Recheneinheit (R) nach jedem Zugriff auf den Speicher (30, 31) erfassbar ist.

6. Vorrichtung (10) nach einem der Ansprüche 4-5, wobei
eine Mehrzahl des Aktors (A1, A2, A3, An) vorhanden ist und
die Recheneinheit (R) mit jedem der Aktoren (A1, A2, A3, An) über den zweiten Bus (B2) verbunden ist.

7. Vorrichtung (10) nach Anspruch 6, wobei
jedem der Sensoren (S1, S2, Sm) mindestens einer der Aktoren (A1, A2, A3, An) zugeordnet ist und die Recheneinheit (R) eine Implementierung einer Sensor-Aktor-Zuordnung umfasst, welche für jeden der Sensoren (S1, S2, Sm) eine Information darüber enthält, welcher der Aktoren (A1, A2, A3, An) dem Sensor zugeordnet ist, und
die Steuereinrichtung (65) der Recheneinheit (R) ausgebildet ist, mindestens einen Aktor (A1), welcher einem der Sensoren (S1, S2, Sm) zugeordnet ist, in Abhängigkeit von einer von der Recheneinheit (R) erfassten Sensor-Zustandsinformation derart anzusteuern, dass die Steuereinrichtung (65) ein erstes Aktor-Steuersignal über den zweiten Bus (B2) an den mindestens einen Aktor (A1), welcher dem einen der Sensoren (S1, S2, Sm) zugeordnet ist, übermittelt, falls die von der Recheneinheit (R) erfasste Sensor-Zustandsinformation dem ersten Zustand des einen der Sensoren (S1, S2, Sm) entspricht, und entweder kein Aktor-Steuersignal oder ein vom ersten Aktor-Steuersignal verschiedenes zweites Aktor-Steuersignal über den zweiten Bus (B2) an den mindestens einen Aktor (A1) übermittelt, falls die von der Recheneinheit (R) erfasste Sensor-Zustandsinformation dem zweiten Zustand des einen der Sensoren (S1, S2, Sm) entspricht.

8. Vorrichtung (10) nach Anspruch 7, mit
einer Auswerteeinrichtung (55), welche ausgebildet ist, für jeden einzelnen der Sensoren (S1, S2, Sm) nach einem Erfassen einer im Speicher (30, 31) des Sensors (S1, S2, Sm) gespeicherten Sensor-Zustandsinformation eine Auswertung der jeweils erfassten Sensor-Zustandsinformation durchzuführen und als Ergebnis der Auswertung nach vorgegebenen Regeln zu ermitteln, ob der mindestens eine Aktor (A1, A2, A3, An), welcher dem Sensor (S1, S2, Sm) gemäss der Sensor-Aktor-Zuordnung zugeordnet ist, zum Ansteuern mindestens einer haustechnischen Einrichtung (5.1, 5.2, 5.3, 5.n) aktiviert werden soll, und, falls das Ergebnis der Auswertung ist, dass der mindestens eine Aktor (A1, A2, A3, An), welcher dem Sensor gemäss der Sensor-Aktor-Zuordnung zugeordnet ist, zum Ansteuern der mindestens einen haustechnischen Einrichtung (5.1, 5.2, 5.3, 5.n) aktiviert werden soll, die Steuereinrichtung (65) zu veranlassen, das Aktor-Steuersignal über den zweiten Bus (B2) an den mindestens einen Aktor (A1, A2, A3, An), welcher dem Sensor (S1, S2, Sm) gemäss der Sensor-Aktor-Zuordnung zugeordnet ist, zu übermitteln.

9. Vorrichtung (10) nach einem der Ansprüche 1-8, wobei die Recheneinheit (R) einen Datenspeicher (60) umfasst, in welchem eine von der Recheneinheit (R) erfasste Sensor-Zustandsinformation speicherbar ist.

10. Vorrichtung (10) nach einem der Ansprüche 1-9, wobei jedem Sensor (S1, S2, Sm) eine Adressinformation zugeordnet ist, welche jeden Sensor eindeutig identifiziert, und jeder Sensor (S1, S2, Sm) ein Adressinformation-Speicherelement (32) umfasst, welches die dem Sensor zugeordnete Adressinformation enthält.

11. Vorrichtung (10) nach Anspruch 10, wobei
die Recheneinheit (R) einen Datenspeicher (60) umfasst, in welchem für jeden Sensor (S1, S2, Sm) Adressdaten gespeichert sind, welche die dem Sensor zugeordnete Adressinformation enthalten.

12. Vorrichtung (10) nach Anspruch 10 oder 11, wobei
jeder Sensor (S1, S2, Sm) von der Recheneinheit (R) mittels eines Sensor-Steuersignals steuerbar ist, welches Sensor-Steuersignal die dem Sensor (S1, S2, Sm) zugeordnete Adressinformation und eine Steuerinformation zum Steuern des Sensors (S1, S2, Sm) enthält und mittels der Speicher-Zugriffsmittel (50) der Recheneinheit (R) erzeugbar und mittels des ersten Busses (B1) zu jedem Sensor (S1, S2, Sm) übertragbar ist, welcher über den ersten Bus (B1) mit der Recheneinheit (R) verbunden ist.

13. Vorrichtung (10) nach Anspruch 12, wobei
jeder Sensor (S1, S2, Sm) eine Busankopplungseinrichtung (35) aufweist, welche ausgebildet ist, ein mittels des ersten Busses (B1) übertragenes Sensor-Steuersignal zu empfangen und
eine Steuerung des Sensors (S1, S2, Sm) zu veranlassen, sofern die im empfangenen Sensor-Steuersignal enthaltene Adressinformation mit der Adressinformation identisch ist, welche dem Sensor (S1, S2, Sm) zugeordnet ist, wobei die Busankopplungseinrichtung (35) ausgebildet ist, die Steuerung des Sensors (S1, S2, Sm) entsprechend der im empfangenen Sensor-Steuersignal enthaltenen Steuerinformation zu veranlassen.

14. Vorrichtung (10) nach Anspruch 13, wobei
die Busankopplungseinrichtung (35) eines Sensors (S1, S2, Sm) mit dem Speicher (30, 31) des Sensors in Verbindung steht und der Speicher des Sensors in Abhängigkeit von dem empfangenen Sensor-Steuersignal steuerbar ist.

15. Vorrichtung (10) nach Anspruch 14, wobei
der Speicher (30, 31) des Sensors (S1, S2, Sm) in Abhängigkeit von dem empfangenen Sensor-Steuersignal steuerbar ist, ein Signal bereitzustellen, welches eine Codierung der im Speicher (30, 31) des Sensors (S1, S2, Sm) gespeicherten Sensor-Zustandsinformation enthält, und
die Speicher-Zugriffmittel (50) der Recheneinheit (R) ausgebildet sind, das vom Speicher bereitgestellte Signal über den ersten Bus (B1) zu detektieren und aus der im Signal enthaltenen Codierung die Sensor-Zustandsinformation zu ermitteln.

16. Vorrichtung (10) nach einem der Ansprüche 12-15, wobei mindestens ein Sensor (S1, S2, Sm) konfigurierbar ist, um einen Betrieb des Sensors in unterschiedlichen Konfigurationen in Abhängigkeit von vorgebbaren Konfigurationsdaten zu ermöglichen,
eine erste Konfigurierung des mindestens einen Sensors nach einer ersten Inbetriebnahme des Sensors von der Recheneinheit (R) mittels eines über den ersten Bus (B1) übermittelten Sensor-Steuersignals veranlassbar ist, dessen Steuerinformation für die erste Konfigurierung vorgesehene Konfigurationsdaten enthält, und
die im Sensor-Steuersignal enthaltenen Konfigurationsdaten im Speicher (30, 31) des mindestens einen Sensors (S1, S2, Sm) speicherbar sind.

17. Vorrichtung nach Anspruch 16, wobei
die vorgebbaren Konfigurationsdaten und/oder die für die erste Konfigurierung vorgesehenen Konfigurationsdaten in einem Datenspeicher (60) der Recheneinheit (R) gespeichert sind.

18. Vorrichtung nach einem der Ansprüche 1-17, wobei mindestens ein an mindestens einen Aktor (A1, A2, A3, An) übermitteltes Aktor-Steuersignal eine Steuerinformation zur Steuerung des mindestens einen Aktors enthält und
die Recheneinheit (R) einen Datenspeicher (60) umfasst, in welchem die im Aktor-Steuersignal enthaltene Steuerinformation speicherbar ist.

19. Vorrichtung nach einem der Ansprüche 1-18, wobei ein Erfassen von Sensor-Zustandsinformationen über den ersten Bus (B1) und ein Übermitteln von Aktor-Steuersignalen über den zweiten Bus (B2) gleichzeitig durchführbar sind.

## Claims

1. A system (10) for home (1) automation which comprises:
at least one actuator (A1, A2, A3) for controlling at least one household device (5.1, 5.2, 5.3);
at least one sensor (S1, S2, Sm) which is configured to be brought into different states and has a measuring device (25) for registering an actual state of the sensor (S1, S2, Sm) and a memory (30, 31), wherein the different states of the sensor comprise at least a first state and a second state and the memory (30, 31) is designed to store sensor state information after registering an actual state of the sensor (S1, S2, Sm) by means of the measuring device (25) in the memory (30, 31), which sensor state information corresponds to the actual state of the sensor (S1, S2, Sm) registered by the measuring device (25);
a processing unit (R);
a bus-type data transmission device (BD) via which the processing unit (R) is connected to the at least one sensor (S1, S2, Sm) and the at least one actuator (A1, A2, A3),
wherein the processing unit (R) comprises a control device (65) which is designed to transmit an actuator control signal via the bus-type data transmission device (BD) to the at least one actuator (A1, A2, A3), with which actuator control signal the at least one actuator (A1, A2, A3) is enabled to be activated to control the at least one household device (5.1);
wherein the processing unit (R) comprises memory access means (50) which are designed to provide access to the memory (30, 31) of the at least one sensor (S1) via the bus-type data transmission device (BD), so that sensor state information stored in the memory (30, 31) of the at least one sensor (S1, S2, Sm) is enabled to be acquired by the processing unit (R);
wherein the control device (65) of the processing unit (R) is designed to control the at least one actuator (A1, A2, A3) depending on sensor state information acquired by the processing unit (R) in such a manner that the control device (65) transmits a first actuator control signal via the bus-type data transmission device (BD) to the at least one actuator (A1, A2, A3) if the sensor state information acquired by the processing unit (R) corresponds to the first state of the at least one sensor (S1, S2, Sm) and either transmits no actuator control signal or a second actuator control signal different from the first actuator control signal via the bus-type data transmission device (BD) to the at least one actuator (A1, A2, A3) if the sensor state information acquired by the processing unit (R) corresponds to the second state of the at least one sensor (S1, S2, Sm);
wherein the memory access means (50) are configured to be controlled to provide access to the memory (30, 31) of the at least one sensor repeatedly at multiple consecutive points in time and
the processing unit (R) is designed to acquire, following each access by the memory access means (50), the sensor state information stored in each case in the memory (30, 31) of the at least one sensor (S1);
wherein the at least one household device and the at least one sensor are designed in accordance with one of the following alternatives (a) - (c):
(a) the at least one household device (5.1) is a lighting device and the at least one sensor (S1) is designed as an operable switch which is configured to be brought into different states, in order to switch at least one light source of the lighting device on or off or to regulate it in terms of the brightness of the light generated by means of the light source;
(b) the at least one household device (5.2) is designed as an arrangement of at least one jalousie and the at least one sensor (S2) is designed as an operable device which is configured to be brought into different states which define target positions of the at least one jalousie;
(c) the at least one household device (5.3) is a heating device for heating at least one room and the at least one sensor (Sm) is designed as an operable device which is configured to be brought into different states which define target temperatures to be reached in the at least one room by means of the heating device;
**characterized in that**
the bus-like data transmission device (BD) comprises a first bus (B1) and a second bus (B2) separate from the first bus,
each sensor (S1, S2, Sm) is connected to the processing unit (R) via the first bus (B1), so that a wired transmission of data or signals between the processing unit (R) and the sensor (S1, S2, Sm) via the first bus (B1) is enabled and each access by the memory access means (50) to the memory (30, 31) of the sensor (S1, S2, Sm) is enabled to be performed via the first bus (B1) and
each actuator (A1, A2, A3, An) is connected to the processing unit (R) via the second bus (B2), so that a wired transmission of data or signals between the processing unit (R) and the actuator (A1, A2, A3, An) via the second bus (B2) is enabled and each actuator control signal is enabled to be transmitted to the actuator (A1, A2, A3) via the second bus (B2) by the control device (65) of the processing unit (R).

2. The device (10) according to claim 1, wherein
the processing unit (R) comprises an evaluation device (55) which is designed to carry out an evaluation of sensor state information acquired by the processing unit (R) and, as a result of the evaluation, to ascertain based on predetermined principles whether the at least one actuator (A1) should be activated to control the at least one household device (5.1) and, if the result of the evaluation is that the at least one actuator should be activated to control the at least one household device, to cause the control device (65) to transmit a corresponding actuator control signal to the at least one actuator (A1) via the second bus (B2).

3. The device (10) according to claim 1 or 2, wherein the control device (65) is designed, following each access of the memory access means (50), to control the at least one actuator (A1) depending on the sensor state information acquired by the processing unit (R) in each case.

4. The device (10) according to one of claims 1 - 3, wherein
a plurality of sensors (S1, S2, Sm) is present,
wherein each of the sensors (S1, S2, Sm) is connected to the processing unit via the first bus (B1) and
wherein the memory access means (50) are designed to provide access to the memory (30, 31) of each of the sensors (S1, S2, Sm) via the first bus (B1), so that each sensor state information stored in the memory of each of the sensors is enabled to be acquired by the processing unit (R).

5. The device (10) according to claim 4, wherein the memory access means (50) are configured to be controlled to provide access to the memory (30, 31) of each of the sensors (S1, S2, Sm) repeatedly at multiple consecutive points in time and
each sensor state information which is stored in the memory (30, 31) of each of the sensors (S1, S2, Sm) in each case is enabled to be acquired by the processing unit (R) following each access to the memory (30, 31).

6. The device (10) according to one of claims 4 - 5, wherein
a plurality of actuators (A1, A2, A3, An) is present and
the processing unit (R) is connected to each of the actuators (A1, A2, A3, An) via the second bus (B2).

7. The device (10) according to claim 6, wherein,
to each of the sensors (S1, S2, Sm), at least one of the actuators (A1, A2, A3, An) is assigned and the processing unit (R) includes an implementation of a sensor/actuator assignment which contains information for each of the sensors (S1, S2, Sm) as to which of the actuators (A1, A2, A3, An) is assigned to the sensor, and
the control device (65) of the processing unit (R) is designed to control at least one actuator (A1) which is assigned to one of the sensors (S1, S2, Sm), depending on sensor state information acquired by the processing unit (R) in such a manner that the control device (65) transmits a first actuator control signal via the second bus (B2) to the at least one actuator (A1) which is assigned to one of the sensors (S1, S2, Sm) if the sensor state information acquired by the processing unit (R) corresponds to the first state of one of the sensors (S1, S2, Sm) and either transmits no actuator control signal or a second actuator control signal different from the first actuator control signal via the second bus (B2) to the at least one actuator (A1) if the sensor state information acquired by the processing unit (R) corresponds to the second state of one of the sensors (S1, S2, Sm).

8. The device (10) according to claim 7, with an evaluation device (55) which is designed to carry out an evaluation of the sensor state information acquired in each case for each of the sensors (S1, S2, Sm) following acquisition of sensor state information stored in the memory (30, 31) of the sensor (S1, S2, Sm) and, as a result of the evaluation, to ascertain based on predetermined principles whether the at least one actuator (A1, A2, A3, An) which is assigned to the sensor (S1, S2, Sm) according to the sensor/actuator assignment, should be activated to control at least one household device (5.1, 5.2, 5.3, 5.n) and, if the result of the evaluation is that the at least one actuator (A1, A2, A3, An) which is assigned to the sensor according to the sensor/actuator assignment, is to be activated to control the at least one household device (5.1, 5.2, 5.3, 5.n), to cause the control device (65) to transmit the actuator control signal via the second bus (B2) to the at least one actuator (A1, A2, A3, An) which is assigned to the sensor (S1, S2, Sm) according to the sensor/actuator assignment.

9. The device (10) according to one of claims 1 - 8, wherein
the processing unit (R) comprises a data memory (60) in which sensor state information acquired by the processing unit (R) is enabled to be stored.

10. The device (10) according to one of claims 1 - 9, wherein
address information is assigned to each sensor (S1, S2, Sm) which address information clearly identifies each sensor and each sensor (S1, S2, Sm) comprises an address information memory element (32) which contains the address information assigned to the sensor.

11. The device (10) according to claim 10, wherein
the processing unit (R) comprises a data memory (60) in which address data are stored for each sensor (S1, S2, Sm) which contain the address information assigned to the sensor.

12. The device (10) according to claim 10 or 11, wherein
each sensor (S1, S2, Sm) is configured to be controlled by the processing unit (R) by means of a sensor control signal, which sensor control signal contains the address information assigned to the sensor (S1, S2, Sm) and control information for controlling the sensor (S1, S2, Sm) and is enabled to be produced by means of the memory access means (50) of the processing unit (R) and is enabled to be transmitted by means of the first bus (B1) to each sensor (S1, S2, Sm) which is connected to the processing unit (R) via the first bus (B1).

13. The device (10) according to claim 12, wherein
each sensor (S1, S2, Sm) has a bus coupling device (35) which is designed to receive a sensor control signal transmitted by means of the first bus (B1) and
to initiate control of the sensor (S1, S2, Sm), if the address information contained in the sensor control signal received is identical to the address information which is assigned to the sensor (S1, S2, Sm), wherein the bus coupling device (35) is designed to initiate control of the sensor (S1, S2, Sm) in accordance with the control information contained in the sensor control signal.

14. The device (10) according to claim 13, wherein
the bus coupling device (35) of a sensor (S1, S2, Sm) is connected to the memory (30, 31) of the sensor and the memory of the sensor is configured to be controlled depending on the sensor control signal received.

15. The device (10) according to claim 14, wherein
the memory (30, 31) of the sensor (S1, S2, Sm) is configured to be controlled depending on the sensor control signal received to provide a signal which contains coding of the sensor state information stored in the memory (30, 31) of the sensor (S1, S2, Sm) and
the memory access means (50) of the processing unit (R) are designed to detect the signal provided by the memory via the first bus (B1) and to determine the sensor state information from the coding contained in the signal.

16. The device (10) according to one of claims 12 - 15, wherein
at least one sensor (S1, S2, Sm) is configurable, in order to allow operation of the sensor in different configurations depending on predeterminable configuration data,
a first configuration of the at least one sensor following initial use of the sensor is enabled to be initiated by the processing unit (R) by means of a sensor control signal transmitted via the first bus (B1), the control information whereof containingi configuration data provided for the first configuration, and
the configuration data contained in the sensor control signal are enabled to be stored in the memory (30, 31) of the at least one sensor (S1, S2, Sm) .

17. The device according to claim 16, wherein
the predeterminable configuration data and/or the configuration data provided for the first configuration are stored in a data memory (60) of the processing unit (R).

18. The device according to one of claims 1 - 17, wherein
at least one actuator control signal transmitted to at least one actuator (A1, A2, A3, An) contains control information for controlling the at least one actuator and
the processing unit (R) comprises a data memory (60) in which the control information contained in the actuator control signal is enabled to be stored.

19. The device according to one of claims 1 - 18, wherein
an acquisition of sensor state information via the first bus (B1) and a transmission of actuator control signals via the second bus (B2) are enabled to be carried out simultaneously.

## Revendications

1. Dispositif (10) d'automatisation d'une maison (1), qui comprend :
au moins un actionneur (A1, A2, A3) pour commander au moins un dispositif domotique (5.1, 5.2, 5.3) ;
au moins un capteur (S1, S2, Sm), qui peut être amené dans différents états et présente un dispositif de mesure (25) pour enregistrer un état momentané du capteur (S1, S2, Sm) et une mémoire (30, 31), dans lequel les différents états du capteur comprennent au moins un premier état et un deuxième état et la mémoire (30, 31) est configurée afin de, après un enregistrement d'un état momentané du capteur (S1, S2, Sm) au moyen du dispositif de mesure (25) dans la mémoire (30, 31) mémoriser une information d'état du capteur, qui correspond à l'état momentané du capteur (S1, S2, Sm) enregistré par le dispositif de mesure (25) ;
une unité informatique (R) ;
un dispositif de transmission de données du type bus (BD), par l'intermédiaire duquel l'unité informatique (R) est reliée avec au moins un capteur (S1, S2, Sm) et au moins un actionneur (A1, A2, A3),
dans lequel l'unité informatique (R) comprend un dispositif de commande (65), qui est configuré afin de, par l'intermédiaire du dispositif de transmission de données du type bus (BD) transmettre à au moins un actionneur (A1, A2, A3) un signal de commande d'actionneur, avec lequel au moins un actionneur (A1, A2, A3) peut être activé, qui commande au moins un dispositif domotique (5.1) ;
dans lequel l'unité informatique (R) comprend des moyens d'accès à la mémoire (50), qui sont configurés afin d'effectuer un accès à la mémoire (30, 31) d'au moins un capteur (S1) par l'intermédiaire du dispositif de transmission de données du type bus (BD), de sorte qu'une information d'état de capteur mémorisée dans la mémoire (30, 31) d'au moins un capteur (S1, S2, Sm) puisse être détectée par l'unité informatique (R) ;
dans lequel le dispositif de commande (65) de l'unité informatique (R) est configuré afin de commander au moins un actionneur (A1, A2, A3) en fonction d'une information d'état des capteurs détectés par l'unité informatique (R) de telle sorte que le dispositif de commande (65) transmette un premier signal de commande d'actionneur par l'intermédiaire du dispositif de transmission de données du type bus (BD) à au moins un actionneur (A1, A2, A3), au cas où l'information d'état de capteur détectée par l'unité informatique (R) corresponde au premier état d'au moins un capteur (S1, S2, Sm), et soit ne transmet aucun signal de commande d'actionneur soit transmet un deuxième signal de commande d'actionneur différent au premier signal de commande d'actionneur par l'intermédiaire du dispositif de transmission de données du type bus (BD) à au moins un actionneur (A1, A2, A3), au cas où l'état d'information de capteur détecté par l'unité informatique (R) corresponde au deuxième état d'au moins un capteur (S1, S2, Sm) ;
dans lequel les moyens d'accès à la mémoire (50) peuvent être commandés, effectuent l'accès à la mémoire (30, 31) d'au moins un capteur de manière répétée à plusieurs points temporels successifs, et
l'unité informatique (R) est configurée de manière à détecter après chaque accès des moyens d'accès à la mémoire (50) l'information d'état de capteur respectivement mémorisée dans la mémoire (30, 31) d'au moins un capteur (1) ;
dans lequel le au moins un dispositif domotique et au moins un capteur sont configurés selon une des alternatives suivantes (a) - (c) :
(a) au moins un dispositif domotique (5.1) et un dispositif d'éclairage et au moins un capteur (S1) est configuré comme un interrupteur pouvant être manipulé, qui peut être amené dans des états différents, afin d'allumer ou éteindre au moins une source lumineuse du dispositif d'éclairage ou réguler la luminosité de la lumière produite au moyen de la source de lumière ;
(b) au moins un dispositif domotique (5.2) est un agencement d'au moins un store vénitien et au moins un capteur (S2) est configuré comme un dispositif manipulable, qui peut être amené dans des états différents qui définissent les positions de consigne d'au moins un store vénitien ;
(c) au moins un dispositif domotique (5.3) est un dispositif de chauffage pour le chauffage au moins une pièce et au moins un capteur (Sm) est configuré comme un dispositif manipulable, qui peut être amené dans des états différents, qui définissent les températures de consigne à atteindre dans au moins une pièce au moyen du dispositif de chauffage ;
**caractérisé en ce que**
le dispositif de transmission de données du type bus (BD) comprend un premier bus (B1) et un deuxième bus (B2) séparé du premier bus ;
chaque capteur (S1, S2, Sm) est relié à l'unité informatique (R) par l'intermédiaire du premier bus (B1), de sorte qu'une transmission filaire de données ou des signaux entre l'unité informatique (R) et le capteur (S1, S2, Sm) par l'intermédiaire du premier bus (B1) soit possible et chaque accès des moyens d'accès à la mémoire (50) puisse être exécuté sur la mémoire (30, 31) du capteur (S1, S2, Sm) par l'intermédiaire du premier bus (B1), et
chaque actionneur (A1, A2, A3, An) est relié à l'unité informatique (R) par l'intermédiaire du deuxième bus (B2), de sorte qu'une transmission filaire de données ou des signaux entre l'unité informatique (R) et l'actionneur (A1, A2, A3, An) soit possible par l'intermédiaire du deuxième bus (B2) et chaque signal de commande d'actionneur puisse être transmis par le dispositif de commande (65) de l'unité informatique (R) à l'actionneur (A1, A2, A3, An) par l'intermédiaire du deuxième bus (B2).

2. Dispositif (10) selon la revendication 1, dans lequel
l'unité informatique (R) comprend une unité d'évaluation (55), qui est configuré afin d'effectuer une évaluation de l'information d'état de capteur détecté par l'unité informatique (R) et déterminer comme résultat de l'évaluation selon des règles prescrites, si au moins un actionneur (A1) doit être activé pour commander au moins un dispositif domotique (5.1), et, au cas où le résultat de l'évaluation est que au moins un actionneur doit être activé pour commander au moins un dispositif domotique, amener le dispositif de commande (65) à transmettre un signal de commande d'actionneur correspondant par l'intermédiaire du deuxième bus (B2) à au moins un actionneur (A1).

3. Dispositif (10) selon la revendication 1 ou 2, dans lequel
le dispositif de commande (65) est configuré afin de, après chaque accès du moyen d'accès à la mémoire (50), commander au moins un actionneur (A1) en fonction de l'information d'état de capteur respectivement détectée par l'unité informatique (R) .

4. Dispositif (10) selon une des revendications 1 - 3, dans lequel
une pluralité de capteurs (S1, S2, Sm) est présente,
dans lequel chacun des capteurs (S1, S2, Sm) est relié par l'intermédiaire du premier bus (B1) à l'unité informatique et
dans lequel les moyens d'accès à la mémoire (50) sont configurés de manière à effectuer un accès à la mémoire (30, 31) de chacun des capteurs (S1, S2, Sm) par l'intermédiaire du premier bus (B1), de sorte que chaque information d'état de capteur, qui est mémorisée dans la mémoire de chacun des capteurs, puisse être détectée par l'unité informatique (R).

5. Dispositif (10) selon la revendication 4, dans lequel les moyens d'accès à la mémoire peuvent être commandés (50) pour effectuer un accès à la mémoire (30, 31) de chacun des capteurs (S1, S2, Sm) de manière répétée à plusieurs points temporels successifs, et
chaque information d'état de capteur, qui est respectivement mémorisée dans la mémoire (30, 31) de chacun des capteurs (S1, S2, Sm), peut être détectée par l'unité informatique (R) après chaque accès à la mémoire (30, 31).

6. Dispositif (10) selon une des revendications 4 - 5, dans lequel
une pluralité d'actionneurs (A1, A2, A3, An) est présente et
l'unité informatique (R) est reliée avec chacun des actionneurs (A1, A2, A3, An) par l'intermédiaire du deuxième bus (B2).

7. Dispositif (10) selon la revendication 6, dans lequel
chacun des capteurs (S1, S2, Sm) est coordonné à au moins un des actionneurs (A1, A2, A3, An) et l'unité informatique (R) comprend une implémentation d'une coordination capteur-actionneur, qui pour chacun des capteurs (S1, S2, Sm) contient une information indiquant lequel des actionneurs (A1, A2, A3, An) est coordonné au capteur, et
le dispositif de commande (65) de l'unité informatique (R) est configuré, de manière à commander au moins un actionneur (A1), qui est coordonné à un des capteurs (S1, S2, Sm), en fonction d'une information d'état de capteur détectée par l'unité informatique (R) de telle sorte que le dispositif de commande (65) transmet un premier signal de commande actionneur par l'intermédiaire du deuxième bus (B2) à au moins un actionneur (A1), qui est coordonnée à un des capteurs (S1, S2, Sm), au cas où l'information d'état des capteurs détectés par l'unité informatique (R) correspond au premier état d'un des capteurs (S1, S2, Sm), et soit ne transmet aucun signal de commande d'actionneur soit transmet un deuxième signal de commande d'actionneur différent du premier signal de commande d'actionneur par l'intermédiaire du deuxième bus (B2) à au moins un actionneur (A1), au cas où l'état d'information de capteur détecté par l'unité informatique (R) correspond au deuxième état d'un des capteurs (S1, S2, Sm).

8. Dispositif (10) selon la revendication 7, comportant
une unité d'évaluation, (55), qui est configurée afin de, pour chaque capteur individuel (S1, S2, Sm) après une détection d'une information d'état de capteur mémorisée dans la mémoire (30, 31) du capteur (S1, S2, Sm), effectuer une évaluation de l'information d'état de capteur respectivement détectée et déterminer comme résultat de l'évaluation selon des règles prescrites, si au moins un actionneur (A1, A2, A3, An), qui est coordonnée au capteur (S1, S2, Sm) selon la coordination capteur-actionneur, doit être activé pour commander au moins un dispositif domotique (5.1, 5.2, 5.3, 5.n) et, au cas où le résultat est l'évaluation, que au moins un actionneur (A1, A2, A3, An), qui est coordonné au capteur selon la coordination capteur-actionneur, doit être activé pour commander au moins un dispositif domotique (5.1, 5.2, 5.3, 5.n), pour amener le dispositif de commande (65) à transmettre le signal de commande d'actionneur par l'intermédiaire du deuxième bus (B2) à au moins un actionneur (A1, A2, A3, An), qui est coordonné au capteur (S1, S2, Sm) conformément à la coordination capteur-actionneur.

9. Dispositif (10) selon une des revendications 1 - 8, dans lequel
l'unité informatique (R) comprend une mémoire de données (60), dans lequel une information d'état de capteur détectée par l'unité informatique (R) peut être mémorisée.

10. Dispositif (10) selon une des revendications 1 - 9, dans lequel
chaque capteur (S1, S2, Sm) est coordonné à une information d'adresse, qui identifie chaque capteur de manière univoque, et chaque capteur (S1, S2, Sm) comprend un élément de mémorisation d'information d'adresse (32), qui contient l'information d'adresse coordonnée au capteur.

11. Dispositif (10) selon la revendication 10, dans lequel
l'unité informatique (R) comprend une mémoire de données (60), dans lequel pour chaque capteur (S1, S2, Sm) des données d'adresse sont mémorisées, qui contiennent une information d'adresse coordonnée au capteur.

12. Dispositif (10) selon la revendication 10 ou 11, dans lequel
chaque capteur (S1, S2, Sm) peut être commandé par l'unité informatique (R) au moyen d'un signal de commande de capteur, lequel signal de commande de capteur contient l'information d'adresse coordonnée au capteur (S1, S2, Sm) et une information de commande pour commander le capteur (S1, S2, Sm) et peut être généré au moyen du moyen d'accès à la mémoire (50) de l'unité informatique (R) et peut être transmis au moyen du premier bus (B1) à chaque capteur (S1, S2, Sm), qui est relié par l'intermédiaire du premier bus (B1) à l'unité informatique (R).

13. Dispositif (10) selon la revendication 12, dans lequel
chaque capteur (S1, S2, Sm) présente un dispositif de couplage au bus (35), qui est configuré afin de recevoir un signal de commande de capteur transmis au moyen du premier bus (B1) et
une unité de commande du capteur (S1, S2, Sm) pour déclencher, dans la mesure où l'information d'adresse contenue dans le signal de commande de capteur reçu est identique à l'information d'adresse, qui est coordonné au capteur (S1, S2, Sm), dans lequel le dispositif de couplage (35) est configuré afin de déclencher l'unité de commande du capteur (S1, S2, Sm) de manière correspondante à l'information de commande contenue dans le signal de commande capteur reçu.

14. Dispositif (10) selon la revendication 13, dans lequel
le dispositif de couplage au bus (35) d'un capteur (S1, S2, Sm) est en liaison avec la mémoire (30, 31) du capteur et la mémoire du capteur peut être commandée en fonction du signal de commande de capteur reçu.

15. Dispositif (10) selon la revendication 14, dans lequel
la mémoire (30, 31) du capteur (S1, S2, Sm) peut être commandée en fonction du signal de commande de capteur reçu, afin de fournir un signal qui contient un codage de l'information d'état de capteurs mémorisée dans la mémoire (30, 31) du capteur (S1, S2, Sm), et
les moyen d'accès à la mémoire (50) de l'unité informatique (R) sont configurés de manière à détecter le signal fourni par la mémoire par l'intermédiaire du premier bus (B1) et déterminer d'après le codage contenu dans le signal d'information d'état de capteur.

16. Dispositif (10) selon une des revendications 12 - 15, dans lequel
au moins un capteur (S1, S2, Sm) peut être configuré afin de permettre un fonctionnement du capteur dans des configurations différentes en fonction de données de configuration prescrites,
une première configuration d'au moins un capteur après une première mise en service du capteur par l'unité informatique (R) peut être déclenché au moyen d'un signal de commande de capteur déterminé par l'intermédiaire du premier bus (B1), dont l'information de commande pour la première configuration contient des données de configuration prévues, et
les données de configuration contenue dans le signal de commande de capteur peuvent être mémorisées dans la mémoire (30, 31) d'au moins un capteur (S1, S2, Sm).

17. Dispositif selon la revendication 16, dans lequel
les données de configuration prescrites et/ou les données de configuration prévues pour la première configuration sont mémorisées dans une mémoire de données (60) de l'unité informatique (R).

18. Dispositif selon une des revendications 1 - 17, dans lequel
au moins un signal de commande d'actionneur transmise à au moins un actionneur (A1, A2, A3, An) contient une information de commande pour la commande d'au moins un actionneur et
l'unité informatique (R) comprend une mémoire de données (60), dans laquelle l'information de commande contenue dans le signal de commande d'actionneur peut être mémorisée.

19. Dispositif selon une des revendications 1 - 18, dans lequel
une détection des informations d'état de capteur par l'intermédiaire du premier bus (B1) et une transmission des signaux de commande d'actionneur par l'intermédiaire du deuxième bus (B2) peuvent être effectuées simultanément.
